# EUROPÄISCHE PATENTSCHRIFT

(11) **EP 3 948 392 B1**
(45) Veröffentlichungstag und Bekanntmachung des Hinweises auf die Patenterteilung: **10.01.2024**
(21) Anmeldenummer: 20721148.3
(22) Anmeldetag: 02.04.2020
(51) Int. Cl.: G02B 21/24, G02B 21/36, G01N 21/64

(54) **VERFAHREN UND VORRICHTUNG ZUM ERFASSEN VON VERLAGERUNGEN EINER PROBE GEGENÜBER EINEM OBJEKTIV**
METHOD AND DEVICE FOR DETECTING MOVEMENTS OF A SAMPLE WITH RESPECT TO A LENS
PROCÉDÉ ET DISPOSITIF DE DÉTECTION DE DÉPLACEMENTS D'UN ÉCHANTILLON PAR RAPPORT À UN OBJECTIF

(30) Priorität: 03.04.2019 DE 102019108696
(43) Veröffentlichungstag der Anmeldung: 09.02.2022
(73) Patentinhaber: Abberior Instruments GmbH, 37077 Göttingen (DE)
(72) Erfinder: SCHMIDT, Roman, 37073 Göttingen (DE); KASTRUP, Lars, 37073 Göttingen (DE)
(74) Vertreter: REHBERG HÜPPE + PARTNER
(86) Internationale Anmeldenummer: PCT/EP2020/059415
(87) Internationale Veröffentlichungsnummer: WO 2020/201430

(56) Entgegenhaltungen:
- WO-A1-2009/085218
- US-A1- 2012 194 903
- US-A1- 2014 022 373
- GARCÍA-MARTÍNEZ PASCUALA ET AL: "On-axis programmable microscope using liquid crystal spatial light modulator", PROCEEDINGS OF SPIE; [PROCEEDINGS OF SPIE ISSN 0277-786X VOLUME 10524], SPIE, US, Bd. 10333, 26. Juni 2017 (2017-06-26), Seiten 103330Q-103330Q, XP060092461, DOI: 10.1117/12.2269760 ISBN: 978-1-5106-1533-5
- TOMONOBU M. WATANABE ET AL: "Distinct Modulated Pupil Function System for Real-Time Imaging of Living Cells", PLOS ONE, Bd. 7, Nr. 9, 4. September 2012 (2012-09-04), Seiten 1-13, XP055583942, DOI: 10.1371/journal.pone.0044028

## Beschreibung

### TECHNISCHES GEBIET DER ERFINDUNG

Die Erfindung bezieht sich auf ein Verfahren zum Erfassen von Verlagerungen einer Probe gegenüber einem Objektiv. Insbesondere bezieht sich die Erfindung auf ein solches Verfahren, bei dem Licht von mindestens einem mit der Probe verbundenen Referenzobjekt zu aufeinanderfolgenden Zeitpunkten mit dem Objektiv in Referenzobjektbilder in einer Bildebene abgebildet wird, bei dem die Referenzbilder in der Bildebene mit einer Kamera aufgezeichnet werden und bei dem die aufgezeichneten Referenzobjektbilder miteinander verglichen werden.

Weiterhin bezieht sich die Erfindung auf eine Vorrichtung zur Durchführung eines solchen Verfahrens mit einem Objektiv und mit einer Kamera, die in einer Bildebene einer das Objektiv umfassenden Abbildungsoptik angeordnet ist.

Insbesondere in der hochauflösenden Mikroskopie, in der räumliche Auflösungen jenseits der Beugungsgrenze erreicht werden, wirken sich Verlagerungen einer untersuchten Probe gegenüber einem Objektiv des jeweiligen Mikroskops auch dann signifikant aus, wenn diese Verlagerungen nicht über den Nanometerbereich hinausgehen. Eine zwischen zwei Zeitpunkten erfolgte Verlagerung der Probe gegenüber dem Objektiv verschiebt die zu diesen beiden Zeitpunkten bestimmten Positionen von Objekten in der Probe relativ zueinander. Wenn auftretende Verlagerungen der Probe gegenüber dem Objektiv nicht erfasst werden, können sie nicht kompensiert werden, und die effektive räumliche Auflösung bei der mikroskopischen Abbildung einer interessierenden Struktur wird durch die Größe dieser Verlagerungen bestimmt.

Da Verlagerungen einer Probe gegenüber dem Objektiv eines Mikroskops insbesondere über längere Messzeiten hinweg niemals ganz zu vermeiden sind und auch das Begrenzen auftretender Verlagerungen auf kleine Werte erheblichen technologischen Aufwand verursacht, besteht ein Interesse daran, auftretende Verlagerungen zu erfassen, um sie berücksichtigen, d. h. insbesondere kompensieren zu können. Das Erfassen der Verlagerungen sollte aber die eigentliche Verwendung des Objektivs möglichst nicht beeinträchtigen, sondern idealerweise parallel zu dieser eigentlichen Verwendung erfolgen können.

### STAND DER TECHNIK

Aus der DE 101 00 246 A1 sind ein Mikroskop, insbesondere ein konfokales oder doppelkonfokales Rastermikroskop, sowie ein Verfahren zum Betreiben eines solchen Mikroskops bekannt, bei denen an einer einem zu untersuchenden Objekt zugeordneten Objektträgereinheit ein Referenzobjekt vorgesehen ist. Zur Kalibrierung, Justierung und/oder Einstellung des Mikroskops wird das Referenzobjekt lichtmikroskopisch detektiert, um driftbedingte Veränderungen zu detektieren und auszugleichen. Das Referenzobjekt kann eine texturierte oder strukturierte Fläche einer Glasplatte sein, die Teil der Objektträgereinheit ist. Das Referenzobjekt kann auch an der Objektträgereinheit angebrachte mikroskopische Objekte, wie beispielsweise Beads oder Nanokristalle, umfassen, die stochastisch verteilt sein können. Das Referenzobjekt wird mit einer Bildaufnahme oder einem Rastervorgang detektiert, und anhand der detektierten Bilddaten des Referenzobjekts wird auf dessen Lage und/oder Orientierung relativ zu dem detektierten Objektbereich geschlossen. Durch Vergleich von detektierten Bilddaten des Referenzobjekts mit zuvor detektierten Bilddaten wird auf die Drift des Objekts / der Objektträgereinheit geschlossen. Diese Drift wird dann durch eine Bewegung der Objektträgereinheit oder mit Methoden der digitalen Bildverarbeitung ausgeglichen. Bei dem bekannten Mikroskop und dem bekannten Verfahren unterbricht die Kalibrierung, Justierung und/oder Einstellung die eigentliche Verwendung des Mikroskops, d. h. sie ist nicht parallel zur eigentlichen Verwendung des Mikroskops durchführbar.

Aus der EP 1 548 485 B1 sind ein Verfahren zur Berechnung der Drift eines Mikroskops und ein entsprechendes Mikroskop bekannt, die die Merkmale der Oberbegriffe der unabhängigen Patentansprüche 1 und 22 aufweisen. Bei der Durchführung des Verfahrens wird ein unbewegliches Objekt ausgewählt und von einem interessierenden Bereich des unbeweglichen Objekts zu einem ersten Zeitpunkt ein erstes Bild und zu einem zeitlich darauf folgenden zweiten Zeitpunkt ein zweites Bild aufgenommen. Das erste und das zweite Bild werden jeweils mit einem Raster in Blöcke unterteilt und dann blockweise auf Verschiebungen hin verglichen. Aus dem Vergleich wird eine Drift ermittelt und zur Korrektur der Drift des Mikroskops abgespeichert. Auch diese Vorgehensweise kann nicht während des normalen Betriebs des Mikroskops durchgeführt werden.

Aus der WO 2013/016356 A1 ist eine Driftkorrektur bei einem Mikroskop bekannt, bei der an einem Probenträger angeordnete Referenzobjekte verwendet werden. Mit ein und derselben Lichtquelle werden sowohl die Referenzobjekte als auch ein interessierendes Objekt beleuchtet, und von dem Referenzobjekten und dem interessierenden Objekt emittierte Photonen werden mit ein und demselben Bildsensor registriert. Die Positionen der Referenzobjekte werden aus mit dem Bildsensor aufgenommenen Bildern extrahiert und zur Korrektur der Drift des Mikroskops verwendet. Zur Bestimmung der Positionen der Referenzobjekte kann konkret ein Schwerpunkt einer zugehörigen Lichtintensitätsverteilung auf dem Bildsensor bestimmt werden. In der Praxis erweist es sich als schwierig, Referenzobjekte zu finden, die in der gleichen Weise wie interessierende Objekte zur Emission von Licht angeregt und mit denselben Bildsensoren in der gleichen Weise abgebildet werden können, um dieses bekannte Verfahren durchzuführen.

Für Lichtmikroskope sind Autofokuseinrichtungen kommerziell erhältlich, bei denen ein Hilfslaserstrahl zusammen mit Beleuchtungslicht, allerdings zum Rand der Pupille hin seitlich verschoben, in das Objektiv des jeweiligen Lichtmikroskops eingekoppelt wird. An einer Grenzfläche zwischen einem Immersionsmedium und einem Deckglas oder zwischen einem Deckglas und einem Einbettmedium entsteht ein Rückreflex dieses Hilfslaserstrahls, der mit dem Objektiv auf einen positionsempfindlichen Detektor abgebildet wird. Die Lage des Rückreflexes auf dem Detektor hängt von dem Abstand der Grenzfläche zu dem Objektiv ab, so dass das Positionssignal des Detektors als Messsignal für eine Regelschleife genutzt werden kann, um eine auftretende axiale Drift eines Probentisches durch Ansteuerung eines z-Triebs des Probentisches oder eines zusätzlichen Aktuators auszuregeln. Prinzipbedingt sind diese Autofokuseinrichtungen auf einen Brechungsindexsprung zwischen dem Immersionsmedium und dem Deckglas bzw. zwischen dem Deckglas und dem Einbettmedium angewiesen, so dass bei bestimmten Kombinationen von Glassorte des Deckglases, Immersionsmedium und Einbettmedium, wie sie zum Beispiel bei der Verwendung von Glyzerinobjektiven auftreten, die Autofokuseinrichtungen in ihrer Funktion beeinträchtigt sind oder vollständig ausfallen. Zudem erlauben die bekannten Autofokuseinrichtungen ausschließlich eine Kompensation von axialer Drift in z-Richtung also längs der optischen Achse des Objektivs, aber nicht in den dazu orthogonal verlaufenden x- und y-Richtungen.

Aus GARCÍA-MARTÍNEZ PASCUALA ET AL: "On-axis programmable microscope using liquid crystal spatial light modulator", Proc. of SPIE Bd. 10333, 103330Q, 26. Juni 2017 ist ein Mikroskop mit einem Objektiv und mit einer Kamera bekannt, die in einer Bildebene einer das Objektiv umfassenden Abbildungsoptik angeordnet ist. In einer Fourierebene der Abbildungsoptik ist ein Spatial Light Modulator (SLM) angeordnet, um Objekte unter Anwendung einer Phasenmaske auf die Kamera abzubilden. Dabei kann die Phasenmaske zum Tiefpass- oder Hochpassfiltern der Ortsfrequenzen der mit der Kamera aufgenommenen Bilder verwendet werden.

Aus der US 2014 / 0 022 373 A1 ist ein Mikroskop mit einem Driftkorrektursystem bekannt, bei dem zusätzliches Infrarotlicht zur Reflexion an einem Deckglas einer Probe mit einem Objektiv des Mikroskops fokussiert wird und von dem Deckglas reflektiertes Infrarotlicht mit einer Kamera detektiert wird.

Aus der US 2012 / 0 194 903 A1 ist ein Mikroskop mit einer Driftkontrolle in drei Dimensionen bekannt. Nahinfrarotes Licht wird auf eine Oberfläche eines Abdeckglases einer Probe gerichtet. Regulär reflektiertes Licht und gestreutes Licht von dem nahinfraroten Licht werden erzeugt und das regulär reflektierte Licht und das gestreute Licht gelangen durch das Objektiv des Mikroskops zu einem halbdurchlässigen Spiegel. Das regulär reflektierte Licht wird verwendet, um den Fokus des Mikroskops zu überwachen. Das gestreute Licht, aus dem das regulär reflektierte Licht ausgeblendet wird, wird verwendet, um die seitliche Drift zu erfassen.

Aus TOMONOBU M. WATANABE ET AL: "Distinct Modulated Pupil Function System for Real-Time Imaging of Living Cells", PLoS One, Bd. 7, Nr. 9, 4. September 2012, Seiten 1-13 ist es bekannt, in der Fourierebene einer Abbildungsoptik eines Mikroskops die Pupillenfunktion mit einem Mikrospiegelarray zu variieren. Beispielsweise werden niedrige Ortsfrequenzen mit einer punktförmigen Blende in der Mitte der Pupille ausgeblendet. Dadurch wird der Durchmesser des Bilds eines fluoreszenten Beads reduziert.

Aus der WO 2009/085218 A1 ist die Verwendung einer Zylinderlinse in einer Abbildungsoptik eines Mikroskops bekannt, um die z-Position eines abgebildeten Objekts aus dem damit herbeigeführten z-positionsabhängigen Abbildungsfehler abzuleiten.

### AUFGABE DER ERFINDUNG

Der Erfindung liegt die Aufgabe zugrunde, ein Verfahren und eine Vorrichtung zum Erfassen von Verlagerungen einer Probe gegenüber einem Objektiv aufzuzeigen, die während des Verwendens des Objektivs zum Abbilden oder anderweitigen Messen eines interessierenden Objekts durchführbar bzw. einsetzbar sind, um die Verlagerungen der Probe gegenüber dem Objektiv zu jedem Zeitpunkt, zu dem das interessierende Objekt durch das Objektiv abgebildet oder gemessen wird, genau erfassen und kompensieren zu können, ohne die Messzeiten zu verlängern.

### LÖSUNG

Die Aufgabe der Erfindung wird durch ein Verfahren zum Erfassen von Verlagerungen einer Probe gegenüber einem Objektiv mit den Merkmalen des unabhängigen Patentanspruchs 1 und durch eine Vorrichtung zur Durchführung des Verfahrens mit den Merkmalen des unabhängigen Patentanspruchs 13 gelöst. Bevorzugte Ausführungsformen des erfindungsgemäßen Verfahrens und der erfindungsgemäßen Vorrichtung sind in den abhängigen Patentansprüchen definiert.

### BESCHREIBUNG DER ERFINDUNG

Ein Verfahren zum Erfassen von Verlagerungen eine Probe gegenüber einem Objektiv, wobei Licht von mindestens einem mit der Probe verbundenen Referenzobjekt zu aufeinanderfolgenden Zeitpunkten mit dem Objektiv in Referenzobjektbilder in einer Bildebene abgebildet wird, wobei die Referenzobjektbilder in der Bildebene mit einer Kamera aufgezeichnet werden und wobei die aufgezeichneten Referenzobjektbilder miteinander verglichen werden, ist erfindungsgemäß dadurch gekennzeichnet, dass in einer zu der Bildebene Fourier-konjugierten Ebene vor der Kamera niedrige Ortsfrequenzen aus den Referenzobjektbildern ausgeblendet werden.

Das Referenzobjekt kann zusätzlich zu einem interessierenden Objekt der Probe vorgesehen sein, das mit dem Objektiv abgebildet oder gemessen wird. Bei einem geeigneten interessierenden Objekt kann es sich jedoch auch um eine Struktur des interessierenden Objekts handeln.

Der Erfindung liegt die Erkenntnis zugrunde, dass Informationen über Verschiebungen zwischen zwei Abbildern des mindestens einen Referenzobjekts ausschließlich in solchen Bereichen der Referenzobjektbilder enthalten sind, die Intensitätsgradienten aufweisen. Aus Bereichen der Referenzobjektbilder mit homogener Verteilung der Intensität sind hingegen keine Informationen über eine Verschiebung der Abbilder des mindestens einen Referenzobjekts zueinander enthalten. Die Informationen über die Verschiebung der Abbilder sind folglich insbesondere in möglichst scharfen Kanten heller Referenzobjekte vor einem dunklen Hintergrund, oder umgekehrt, enthalten, die zu großen Gradienten der Lichtintensität in den Abbildern führen.

Bei dem erfindungsgemäßen Verfahren werden daher in einer zu der Bildebene Fourier-konjugierten Ebene vor der Kamera niedrige Ortsfrequenzen aus den Referenzobjektbildern ausgeblendet oder, anders gesagt, niedrige Ortsfrequenzen in den Referenzobjektbildern gegenüber hohen Ortsfrequenzen abgeschwächt. Auf diese Weise wird eine Kantendetektionsfilterung durchgeführt, die gleichförmige Bereiche gegenüber Bereichen der Referenzobjektbilder mit starken Helligkeitsgradienten unterdrückt.

Indem die ausgeblendeten niedrigen Ortsfrequenzen, die homogenen hellen Bildbereichen der Referenzobjektbilder entsprechen würden, erst gar nicht zu der Kamera gelangen, können sie die Aufzeichnung der höheren Ortsfrequenzen mit dem höheren Gehalt an Informationen bezüglich der Lage der Abbilder nicht durch ein beispielsweise aufgrund von Streulicht erhöhtes Signalrauschen beeinträchtigen. Zudem kann der Dynamikbereich der Kamera, ohne dass eine Sättigungsintensität der Kamera weit und großflächig überschritten wird, in jenen Bereichen der Referenzobjektbilder voll ausgeschöpft werden, in denen der Gehalt an Informationen bezüglich der Lage der Abbilder des mindestens einen Referenzobjekts in den Referenzobjektbildern am höchsten ist.

Die Kantendetektionsfilterung kann durch das Ausblenden von Anteilen des Lichts, die aus dem Zentralbereich einer Pupille des Objektivs stammen, in der zu der Bildebene Fourier-konjugierten Ebene bewirkt werden. Damit werden die nahe dem Mittelpunkt der Pupille liegenden niedrigen Ortsfrequenzen unterdrückt. Hier und im Folgenden ist mit der Pupille des Objektivs dessen okularseitige Pupille gemeint, die auch als Austrittspupille bezeichnet wird. Die okularseitige Pupille ist das Bild einer Aperturblende des Objektivs, welches dem Beobachter von einem Achsenbildpunkt aus erscheint. Bei Objektiven von Mikroskopen fällt die okularseitige Pupille praktisch mit deren hinterer Fokalebene zusammen. Bei Objektiven für einen Unendlich-Strahlengang gilt dies exakt, bei solchen für einen Endlich-Strahlengang zumindest ungefähr. Daher wird die okularseitige Pupille vielfach und so auch hier als Synonym für die hintere Fokalebene des Objektivs verwendet. Zudem liegt die okularseitige Pupille nahe einer Fourier-konjugierten Ebene zur Objektebene des Objektivs, damit liegt in der Bildebene eine Amplitudenverteilung des elektromagnetischen Feldes vor, die in sehr guter Näherung einer Fouriertransformierten der Amplitudenverteilung des elektromagnetischen Feldes in der Pupille entspricht. Die Anteile des Lichts von dem mindestens einen Referenzobjekt, die aus dem Zentralbereich der Pupille des Objektivs stammen, zählen daher zu den auszublendenden niedrigen Ortsfrequenzen.

Um die Anteile des Lichts, die aus dem Zentralbereich der Pupille des Objektivs stammen, in der zu der Bildebene Fourier-konjugierten Ebene auszublenden, kann die Pupille des Objektivs in eben diese Fourierebene abgebildet werden.

Bei dem erfindungsgemäßen Verfahren werden vorzugsweise ausschließlich hohe Ortsfrequenzen und damit Anteile des Lichts, die aus einem Randbereich der Pupille des Objektivs stammen, zu der Kamera durchgelassen. Noch mehr ist es bevorzugt, wenn diese hohen Ortsfrequenzen bzw. Anteile aus dem Randbereich der Pupille möglichst vollständig zu der Kamera durchgelassen werden. Die Referenzobjektbilder enthalten dann maximale Informationen über die Lage der Abbilder des mindesten einen Referenzobjekts.

Konkret können die niedrigen Ortsfrequenzen und damit die Anteile des Lichts, die aus dem Zentralbereich der Pupille des Objektivs stammen, mit einer den Zentralbereich abdeckenden Kreisscheibe ausgeblendet werden. Statt der Kreisscheibe kann zum Ausblenden auch ein den Zentralbereich abdeckender Spiegel verwendet werden. Dieser Spiegel kann die niedrigen Ortsfrequenzen, dann zu einem weiteren Detektor hin umlenken, um sie zum Beispiel hinsichtlich der Helligkeit der Abbilder des mindesten einen Referenzobjekts auszuwerten. Wenn zum Ausblenden der niedrigen Ortsfrequenzen vor der Kamera ein Spatial Light Modulator (SLM) verwendet wird, kann der ausgeblendete Bereich der Fourier-konjugierten Ebene durch Ansteuern des SLM schnell variiert werden, um ihn zu optimieren. Zudem kann der SLM auch angesteuert werden, um die Referenzobjekte in herkömmlicher Weise oder in zu den Referenzobjektbildern komplementären Bildern auf die Kamera abzubilden.

Eine den Zentralbereich der Pupille in der der Fourier-konjugierten Ebene abdeckende Kreisscheibe kann konkret durch ein mittig kreisförmig metallisch bedampftes Glassubstrat realisiert werden. Im einfachsten Fall erfolgt das Kantendetektionsfiltern bei dem erfindungsgemäßen Verfahren mit einem dünnen Draht, beispielsweise aus Metall, der sich in der zu der Bildebene Fourier-konjugierten Ebene durch das Zentrum der Abbildung der Pupille des Objektivs erstreckt. Dieses Filter filtert die Ortsfrequenzen zwar richtungsabhängig, aber mit einer mit zunehmender Ortsfrequenz abnehmenden Richtungsabhängigkeit und für alle Abbilder des mindestens einen Referenzobjekts in gleicher Weise. Da bei dem erfindungsgemäßen Verfahren nur Änderungen der Lagen der Abbilder betrachtet werden, ist die Richtungsabhängigkeit der Filterung daher unerheblich.

Unabhängig davon, wie bei dem erfindungsgemäßen Verfahren die niedrigen Ortsfrequenzen vor der Kamera ausgeblendet werden, gelangen diese Anteile des Lichts nicht zu der Kamera. Die erfindungsgemäße Kantendetektionsfilterung ist also kein Schritt der Bildverarbeitung eines mit der Kamera aufgenommenen Bilds. Vielmehr entstehen erfindungsgemäß auf der Kamera direkt Referenzobjektbilder, bei denen die erfindungsgemäße Kantendetektionsfilterung bereits durchgeführt ist.

Bei dem erfindungsgemäßen Verfahren weist das mindestens eine Referenzobjekt eine steile Kante auf, über der die Intensität des von dem Referenzobjekts ausgehenden Lichts um mindestens 90 % abfällt und deren Breite parallel zu der Bildebene kleiner als die Wellenlänge des Lichts ist. Da monochromatisches Licht, d. h. Licht einer Wellenlänge von dem mindestens einen Referenzobjekt in die Referenzobjektbilder in der Bildebene abgebildet wird, zeigt sich in den kantendetektionsgefilterten Referenzobjektbildern an der Kante ein Beugungsmuster. Konkret zeigt die Lichtintensitätsverteilung im Anschluss an ein Intensitätsmaximum nullter Ordnung, das wegen der ausgeblendeten niedrigen Ortsfrequenzen in seiner Intensität stark reduziert ist, ein Intensitätsminimum erster Ordnung, an das sich ein Intensitätsmaximum erster Ordnung anschließt. Beide an das Intensitätsminimum erster Ordnung angrenzenden Intensitätsanstiege zu den Intensitätsmaxima nullter und erster Ordnung weisen in Bezug auf die Gesamtlichtmenge eine hohe Informationsdichte zu der jeweiligen Lage der Kante des mindestens einen Referenzobjekts auf. Je nach der Obergrenze, bis zu der die niedrigen Ortsfrequenzen ausgeblendet werden, und der Apertur der Abbildung können an das Intensitätsmaximum erster Ordnung auch ein Intensitätsminimum zweiter Ordnung und ein Intensitätsmaximum zweiter Ordnung anschließen, wobei beide an das Intensitätsminimum zweiter Ordnung angrenzenden Intensitätsanstiege zu den Intensitätsmaxima erster und zweiter Ordnung eine hohe Informationsdichte zu der jeweiligen Lage der Kante des mindestens einen Referenzobjekts aufweisen.

Wenn das mindestens eine Referenzobjekt eine Abmessung von der Wellenlänge des Beleuchtungslichts oder darunter hat, besteht es praktisch nur aus Kanten und sorgt so für eine in Bezug auf die Gesamtlichtmenge maximale Informationsdichte zu der jeweiligen Lage des Referenzobjekts. Konkret kann das mindestens eine Referenzobjekt eine punktförmige Markierung oder ein Bead mit einem Durchmesser unterhalb der Wellenlänge des Lichts sein, wobei das kantendetektionsgefilterte monochromatische Abbild des Referenzobjekts in den Referenzobjektbildern zwei oder mehr konzentrische Intensitätsringe zeigt. Als Referenzobjekte sehr gut geeignet sind auch sogenannte Gold-Nanorods, die kommerziell erhältlich sind und Durchmesser im Bereich von 50 nm bis 150 nm, beispielsweise von 75 nm oder 100 nm, und Längen im Bereich von 300 nm bis 2.000 nm, beispielsweise von 500 nm oder 1.000 nm, aufweisen können.

Wenn bei dem erfindungsgemäßen Verfahren monochromatisches Licht von dem mindestens einen Referenzobjekt in die Referenzobjektbilder in der Bildebene abgebildet wird kann das Licht von dem mindestens einen Referenzobjekt aufgrund seiner Wellenlänge von Messlicht von der Probe abgetrennt werden, das mit dem Objektiv auf einen anderen Detektor als die Kamera abgebildet wird. Anders gesagt kann das erfindungsgemäße Verfahren parallel zu der eigentlichen Verwendung des Objektivs unter Abbildung von Messlicht auf den anderen Detektor durchgeführt werden.

Konkret kann die Probe im Weitfeld mit Beleuchtungslicht beleuchtet werden, das eine Abstrahlung des Lichts von dem mindestens einen mit der Probe verbundenen Referenzobjekt hervorruft.

Wenn dabei das mindestens eine Referenzobjekt durch das Objektiv beleuchtet wird, wird das Beleuchtungslicht typischerweise in ein Zentrum der Pupille des Objektivs fokussiert, weil sich dann ebene Wellenfronten des Beleuchtungslichts im Objektraum ergeben. Dieses Fokussieren des Beleuchtungslichts ist grundsätzlich mit dem Auftreten starker zu der Kamera gerichteter Reflexionen des Beleuchtungslichts an nahe der Pupille angeordneten Linsenoberflächen des Objektivs verbunden. Bei dem erfindungsgemäßen Verfahren werden diese Reflexionen des Beleuchtungslichts jedoch automatisch ausgeblendet, da auch sie aus dem Zentralbereich der Pupille stammendes Licht sind.

Alternativ kann das mindestens eine Referenzobjekt statt durch das Objektiv mit Hilfe einer vollständig separaten Beleuchtungseinrichtung mit Beleuchtungslicht beleuchtet werden, das die Abstrahlung des Lichts von dem mindestens einen Referenzobjekt hervorruft. Eine separate Beleuchtungseinrichtung kann eine seitlich neben dem Objektiv angeordnete, eine dem Objektiv über die Probe hinweg gegenüberliegende oder eine zwischen Objektiv und Probe liegende Beleuchtungslichtquelle aufweisen.

In einer Ausführungsform des erfindungsgemäßen Verfahrens, die hier auch unabhängig von dem Merkmal, dass niedrige Ortsfrequenzen vor der Kamera aus den Referenzobjektbildern ausgeblendet werden, als Erfindung offenbart wird, wird das mindestens eine Referenzobjekt durch einen quer zur optischen Achse des Objektivs ausgerichteten Wellenleiter der Probe hindurch mit dem Beleuchtungslicht beleuchtet, das die Abstrahlung des Lichts von dem mindestens einen Referenzobjekt hervorruft. Als Wellenleiter kann eine Glasplatte oder eine andere aus einem optisch transparenten Material ausgebildete Platte der Probe verwendet werden. Diese Beleuchtung ist besonders wirksam, wenn sich das mindestens eine Referenzobjekt auf einer Oberfläche der Platte oder in der Platte befindet. Die Platte kann konkret ein Objektträger oder ein Deckglas der Probe sein. Wenn der Objektträger oder das Deckglas Fehlstellen hat, die als Streuzentren wirken, können diese Fehlstellen als Referenzobjekte dienen. Wenn das Beleuchtungslicht kohärentes Licht ist, kann z. B. auch ohne Ausblenden von Anteilen des Lichts, die aus einem Zentralbereich einer Pupille des Objektivs stammen, ein Specklemuster des von dem mindestens einen Referenzobjekt oder einem anderen Teil der Probe gestreuten Beleuchtungslichts mit der Kamera erfasst und auf Veränderungen beobachtet werden.

Hier ist anzumerken, dass sich auch dann, wenn kein explizit kohärentes monochromatisches Beleuchtungslicht zum Beleuchten des mindestens einen Referenzobjekts verwendet wird, in den Referenzobjektbildern ein Beugungsmuster zeigt, wenn das mindestens eine Referenzobjekt eine ausreichend steile Kante und insbesondere einen Durchmesser unterhalb der Wellenlänge des Beleuchtungslichts aufweist.

In jedem Fall ist es bei dem erfindungsgemäßen Verfahren günstig, wenn die Probe mit monochromatischem Beleuchtungslicht einer Wellenlänge beleuchtet wird, um das Licht von dem mindestens einen Referenzobjekt mit eben dieser Wellenlänge hervorzurufen. Dabei ist die Angabe "monochromatisch" bzw. "eine Wellenlänge" zu dem Beleuchtungslicht hier immer so zu verstehen, dass die Bandbreite der Wellenlänge des Beleuchtungslichts so klein ist, dass das beschriebene Beugungsmuster in zum Erfassen von Verlagerungen der Probe gegenüber dem Objektiv nutzbarer Form auftritt. Die Verwendung eines preisgünstigen herkömmlichen Lasers, einschließlich einer Laserdiode, ist hierfür ausreichend.

Vorzugsweise wird das mindestens eine Referenzobjekt mit Beleuchtungslicht beleuchtet, dessen Wellenlänge sich von Wellenlängen von Messlicht von der Probe und von Anregungslicht, das das Messlicht von der Probe hervorruft, um jeweils mindestens 50 nm oder vorzugsweise mindestens 100 nm unterscheidet. Diese Wellenlängenunterschiede des Beleuchtungslichts und auch des Lichts von dem mindestens einen Referenzobjekt sowohl zu dem Messlicht von der Probe als auch zu dem Anregungslicht, das das Messlicht hervorruft, ermöglichen nicht nur eine spektrale Abtrennung des Lichts von dem mindestens einen Referenzobjekt von dem Messlicht, sondern auch ein störungsfreies Nebeneinander des Messens der Probe mit dem Anregungslicht und des Hervorrufens des Lichts von dem mindestens einen Referenzobjekt mit dem Beleuchtungslicht.

Bei dem erfindungsgemäßen Verfahren kann in den Referenzobjektbildern zusätzlich weiteres Licht von mindestens einer zwischen der Probe und dem Objekt befindlichen optischen Grenzfläche oder von mindestens einem weiteren Referenzobjekt, das an dem Objektiv angeordnet ist, mit der Kamera aufgezeichnet werden. Dieses weitere Licht enthält weitere Informationen über die relative Lage der optischen Grenzfläche gegenüber dem Objektiv bzw. des Objektivs gegenüber der Kamera und damit über etwaige zusätzliche Driften, die es zu kompensieren gilt. Auch bezüglich des weiteren Lichts kann bei dem erfindungsgemäßen Verfahren die Kantendetektionsfilterung durchgeführt werden.

Bei dem erfindungsgemäßen Verfahren wird die Kamera vorzugsweise so ausgesteuert, dass die maximalen Bildintensitäten in den Referenzobjektbildern 90 % bis 1.000 % einer Sättigungsintensität der Kamera erreichen. Dabei ist es bevorzugt, wenn die maximalen Lichtintensitäten 100 bis 150 % dieser Sättigungsintensität erreichen. Anders gesagt wird die Kamera so ausgesteuert, dass ihr Dynamikbereich voll ausgenutzt wird, wobei hingenommen wird, dass die maximalen Lichtintensitäten oberhalb der Sättigungsintensität der Kamera liegen und deshalb nicht mehr aufgelöst werden. Dem liegt die Überlegung zugrunde, dass auch in den kantendetektionsgefilterten Referenzobjektbildern, die bei dem erfindungsgemäßen Verfahren entstehen, die höchsten Lichtintensitäten nur wenig Informationen über die interessierenden Lagen der Abbilder des mindestens einen Referenzobjekts enthalten. Wichtiger ist es, die darunterliegenden Intensitätsgradienten maximal aufzulösen.

Bei den Vergleichen der aufgezeichneten Referenzobjektbilder im Rahmen des erfindungsgemäßen Verfahrens kann aus einer Verschiebung von Abbildern des mindestens einen Referenzobjekts zwischen den Referenzobjektbildern auf eine laterale Verlagerung der Probe gegenüber dem Objektiv orthogonal zu einer optischen Achse des Objektivs, d. h. in den x- und y-Richtungen, geschlossen werden. Diese Verschiebung kann zum Beispiel durch Berechnung von Korrelationen zwischen den Referenzobjektbildern bestimmt werden. Aus Verformungen der Abbilder des mindestens einen Referenzobjekts zwischen den Referenzobjektbildern kann hingegen auf eine Verlagerung der Probe gegenüber dem Objektiv längs der optischen Achse des Objektivs geschlossen werden. Dabei kann aus einer Ähnlichkeit von Abbildern des mindestens einen Referenzobjekts in den Referenzobjektbildern mit Abbildern der oder anderer Referenzobjekte in Referenzobjektvergleichsbildern auf eine nach Betrag und/oder Richtung bestimmte Verlagerung der Probe gegenüber dem Objektiv längs der optischen Achse des Objektivs geschlossen werden. Konkret kann also zu Beginn der Durchführung des erfindungsgemäßen Verfahrens ein Stapel von Referenzobjektvergleichsbildern für verschiedene Abstände der Probe zu dem Objektiv längs der optischen Achse aufgenommen werden. Dann kann aus der Ähnlichkeit des Abbilds des mindestens einen Referenzobjekts in einem der Referenzobjektbilder zu den Abbildern des Referenzobjekts in den Referenzobjektvergleichsbildern auf den zu dem jeweiligen Referenzobjektbild zugehörigen Abstand rückgeschlossen werden. Dieser Rückschluss wird vereinfacht, wenn mit Hilfe einer zwischen der Kamera und dem Objektiv angeordneten Zylinderlinse oder eines anderen optischen Elements ein Astigmatismus oder ein anderer Abbildungsfehler in die Abbildung auf die Kamera eingeführt wird, der die Symmetrie der Verformung der Abbilder des wenigsten einen Referenzobjekts mit zunehmenden Abstand zu einer Fokalebene des Objektivs aufhebt, so dass eine Richtung dieses Abstands erkennbar wird.

Bei dem erfindungsgemäßen Verfahren kann das mindestens eine Referenzobjekt mit einem fokussierten Lichtpuls in eine Glasplatte oder eine andere aus einem optisch transparenten Material ausgebildete Platte der Probe eingebracht werden. Dass selbst eine Glasplatte durch einen fokussierten Lichtpuls beispielsweise durch Verdampfen lokal veränderbar ist, ist grundsätzlich bekannt, siehe zum Beispiel die US 9 370 956 B2. Hiervon kann bei dem erfindungsgemäßen Verfahren Gebrauch gemacht werden, um das mindestens eine Referenzobjekt an besonders geeigneter Stelle der Probe anzubringen bzw. in die Probe einzubringen. Dazu kann der Lichtpuls mit dem Objektiv in die jeweilige Platte aus optisch transparentem Material fokussiert werden. Dabei kann der fokussierte Lichtpuls mit einem Scanner gegenüber der Platte positioniert werden, mit dem die Probe zum Hervorrufen von Messlicht von der Probe mit einer lokalen Lichtintensitätsverteilung gescannt wird. Damit ist insbesondere der Scanner eines Laserscanningmikroskops gemeint. Auch ein Laser eines solchen Laserscanningmikroskops, mit dem die lokalisierte Lichtintensitätsverteilung zum Hervorrufen des Messlichts von der Probe bereitgestellt wird, kann zur Bereitstellung des Lichtpulses für das Einbringen des Referenzobjekts in die Probe genutzt werden, beispielsweise wenn der Laser dazu geeignet ist, seine Laserleistung hierfür in besonders kurzzeitigen Lichtpulsen zu konzentrieren. Als Platte aus optisch transparentem Material der Probe, in die das Referenzobjekt mit einem fokussierten Lichtpuls eingebracht wird, kommt sowohl ein Deckglas als auch ein Probenträger der Probe in Frage.

Mit Wiederholungen des Lichtpulses kann zudem in der oder einer anderen Platte aus optisch transparentem Material der Probe ein eine Information kodierendes dauerhaftes Muster in die Probe eingebracht werden. Die dabei kodierte Information kann zum Beispiel die Art, den Umfang und/oder die Zeitpunkte der schon erfolgten Messungen der Probe dokumentieren.

Wie schon wiederholt angesprochen wurde, kann das erfindungsgemäße Verfahren während der eigentlichen Nutzung des Objektivs zum Messen der Probe durchgeführt werden. Konkret können die Referenzobjektbilder mit der Kamera aufgezeichnet werden, während eine interessierende Struktur der Probe durch konfokale, STED-, RESOLFT- oder MINFLUX-Mikroskopie abgebildet wird. Wenn dabei mit dem erfindungsgemäßen Verfahren Verlagerungen der Probe gegenüber dem Objektiv erfasst werden, können diese für das mikroskopische Abbilden der Probe kompensiert werden. Diese Kompensation kann durch direkten Ausgleich der Verlagerungen, durch gegenläufige Verlagerungen der Probe gegenüber dem Objektiv oder durch eine eine virtuelle Verlagerung der Probe gegenüber dem Objektiv bewirkende Ansteuerung einer adaptiven Optik herbeigeführt werden, aber auch durch eine rechnerische Korrektur der mikroskopischen Abbildung der Probe.

Wenn sich das mindestens eine Referenzobjekt in einer Referenzobjektebene befindet, die in Richtung der optischen Achse des Objektivs merklich von einem interessierenden Objekt der Probe beabstandet ist, ist es sinnvoll, dass das mindestens eine Referenzobjekt mit Hilfe mindestens einer zu dem Objektiv zusätzlichen Linse in die Referenzobjektbilder in der Bildebene abgebildet wird. D. h., die Referenzobjektebene kann gegenüber einer Objektebene, in der das mit dem Objektiv abgebildete interessierende Objekt der Probe angeordnet ist, in Richtung der optischen Achse des Objektivs versetzt sein. Allgemeiner formuliert ist es bevorzugt, wenn die Brennweite der Abbildungsoptik einstellbar ist, so dass eine Referenzobjektebene, die von der Abbildungsoptik in die Bildebene abgebildet wird, gegenüber einer Objektebene, die das Objektiv abbildet, in Richtung der optischen Achse des Objektivs verschiebbar ist.

Eine erfindungsgemäße Vorrichtung zur Durchführung des erfindungsgemäßen Verfahrens mit einem Objektiv und mit einer Kamera, die in einer Bildebene einer das Objektiv umfassenden Abbildungsoptik angeordnet ist, ist zwischen dem Objektiv und der Kamera eine optische Einrichtung in einer zu der Bildebene Fourier-konjugierten Ebene angeordnet, die dazu ausgebildet ist, niedrige Ortsfrequenzen aus Referenzobjektbildern auszublenden, die die Abbildungsoptik in die Bildebene abbildet.

Die so angeordnete und ausgebildete optische Einrichtung blendet Anteile von Licht, die aus einem Zentralbereich einer Pupille des Objektivs stammen, vor der Kamera aus.

Vorzugsweise ist die Einrichtung in einer solchen zu der Bildebene Fourier-konjugierten Bildebene angeordnet, in die die Pupille des Objektivs abgebildet wird.

Konkret kann die optische Einrichtung zum Ausblenden der niedrigen Ortsfrequenzen eine einen Bereich der Bildebene um den Achsenbildpunkt und damit den Zentralbereich der Pupille abdeckende Kreisscheibe oder einen die niedrigen Ortsfrequenzen zu einem weiteren Detektor der Vorrichtung hin umlenkenden Spiegel oder einen Spatial Light Modulator (SLM) aufweisen. Im einfachsten Fall ist die optische Einrichtung ein in der Fourier-konjugierten Ebene durch den Achsenbildpunkt bzw. das Zentrum der Abbildung der Pupille verlaufender Draht.

Zwischen der Fourier-konjugierten Ebene und dem Objektiv kann ein Polarisationsstrahlteiler angeordnet sein, über den eine Beleuchtungslichtquelle Beleuchtungslicht zu dem Objektiv hin einkoppelt, wobei Licht, das nach Reflexion des Beleuchtungslichts an mindestens einem vor dem Objektiv angeordneten Referenzobjekt zurück in das Objektiv gelangt, aufgrund seiner Polarisationsrichtung von dem Polarisationsstrahlteiler zu der Kamera hin transmittiert wird.

Um nur solches reflektiertes Licht zu der Kamera durchzulassen, das seine zirkulare Polarisationsrichtung beibehalten hat, kann zwischen dem Polarisationsstrahlteiler und dem Objektiv eine λ/4-Verzögerungsplatte angeordnet sein. Aufgrund der λ/4-Verzögerungsplatte zwischen dem Polarisationsstrahlteiler und dem Referenzobjekt weist das von dem Referenzobjekt gestreute Licht beim Auftreffen auf den Polarisationsstrahlteiler überwiegend eine zum Beleuchtungslicht orthogonale Polarisation auf, die durch den Polarisationsstrahlteiler von dem Beleuchtungslicht separiert wird und dann auf die Kamera abgebildet wird. Mögliche Reflexe des Beleuchtungslichts an Oberflächen von optischen Elementen, die sich zwischen dem Polarisationsstrahlteiler und der λ/4-Verzögerungsplatte befinden, werden dagegen von dem Polarisationsstrahlteiler in Richtung des Beleuchtungsstrahls abgelenkt.

Die λ/4-Verzögerungsplatte kann aber auch weggelassen werden, wenn gezielt nur Licht von dem mindestens einen Referenzobjekt, das seine lineare Polarisationsrichtung im Gegensatz zu an jeglichen optischen Grenzflächen reflektiertem Beleuchtungslicht geändert hat, von dem Polarisationsstrahlteiler zu der Kamera hin transmittiert werden soll.

Die erfindungsgemäße Vorrichtung kann zwischen dem Objektiv und der Kamera ein Bandpassfilter aufweisen, das nur Licht einer Wellenlänge von dem mindestens einen Referenzobjekt zu der Kamera durchlässt.

Eine Beleuchtungslichtquelle der Vorrichtung zum Beleuchten des mindestens einen Referenzobjekts kann monochromatisches Beleuchtungslicht, d. h. Beleuchtungslicht einer Wellenlänge bereitstellen, wobei die Wellenlänge regelmäßig dieselbe ist, die das zwischen dem Objektiv und der Kamera angeordnete Bandpassfilter zu der Kamera durchlässt.

Vorzugsweise wird das Beleuchtungslicht in Form eines linear polarisierten, kollimierten Beleuchtungsstrahls über den Polarisationsstrahlteiler eingekoppelt. Konkret kann das Beleuchtungslicht eine Wellenlänge in einem Infrarotbereich von ca. 800 nm oder vorzugsweise ca. 900 nm bis 1.300 nm aufweisen. Wenn der Beleuchtungsstrahl durch eine Tubuslinse in die Pupille des Objektivs fokussiert wird, wird die Probe durch den Beleuchtungsstrahl großflächig, d. h. im Weitfeld ausgeleuchtet. Wenn dabei das Beleuchtungslicht in das Zentrum der Pupille des Objektivs fokussiert wird, um im Bereich der Probe ebene Wellenfronten des Beleuchtungslichts auszubilden, treten an der Pupille nahen Linsenoberflächen, die senkrecht zur optischen Achse stehen, starke Reflexe des Beleuchtungslicht zu der Kamera hin auf, die die Aufnahme der Referenzobjektbilder beeinträchtigen könnten und die selbst mit einem Polarisationsstrahlteiler und einer zwischen diesem und dem Objektiv angeordneten λ/4-Verzögerungsplatte nicht von der Kamera zurückgehalten werden. Auch solches Licht des Strahls oder Kegels des fokussierten Beleuchtungslichts, das unter einem Winkel zur optischen Achse auf die ersten Linsenoberflächen zuläuft, kann senkrecht oder nahezu senkrecht auf diese Linsenoberflächen auftreffen, sodass es in sich selbst zurückgespiegelt wird und dementsprechend ebenfalls zu dem zu der Kamera hin laufenden Reflex des Beleuchtungslichts beiträgt. Auch alle diese Reflexe werden aber von der optischen Einrichtung, die das Licht aus dem Zentralbereich der Pupille ausblendet, automatisch mit ausgeblendet.

Das Referenzobjekt ist vorzugsweise eine Markierung an einer Oberfläche eines Deckglases der Probe.

Wie schon angedeutet wurde, beginnt ein Strahlengang der erfindungsgemäßen Vorrichtung zwischen dem Objektiv und der Kamera an dem Objektiv bevorzugt als Unendlich-Strahlengang. Entsprechend schließt das Objektiv dann auch beim eigentlichen Messen der Probe an einen Unendlich-Strahlengang an.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem optischen Element die Rede ist, ist dies so zu verstehen, dass genau ein optisches Element, zwei optische Elemente oder mehr optische Elemente vorhanden sind. Die in den Patentansprüchen angeführten Merkmale können durch andere Merkmale ergänzt werden oder die einzigen Merkmale sein, die das jeweilige Verfahren oder die jeweilige Vorrichtung aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste Ausführungsform einer erfindungsgemäßen Vorrichtung zur Durchführung des erfindungsgemäßen Verfahrens.
- **Fig. 2**: zeigt ein Detail der Ausführungsform der Vorrichtung gemäß Fig. 1.
- **Fig. 3**: zeigt eine Variante des Details gemäß Fig. 2.
- **Fig. 4**: zeigt ein erfindungsgemäß kantendetektionsgefiltertes Referenzobjektbild in vereinfachter Darstellung.
- **Fig. 5**: zeigt ein zu dem Referenzobjektbild gemäß Fig. 4 komplementäres Bild aus den bei dem erfindungsgemäß kantendetektionsgefilterten Referenzobjektbild weggefilterten Bildanteilen in vereinfachter Darstellung.
- **Fig. 6**: zeigt ein reales erfindungsgemäß kantendetektionsgefiltertes Referenzobjektbild.
- **Fig. 7**: ist ein Intensitätsprofil längs einer in Fig. 6 eingezeichneten Schnittlinie durch ein Abbild eines Referenzobjekts im dem realen Referenzobjektbild.
- **Fig. 8**: illustriert eine Kompensationseinrichtung der erfindungsgemäßen Vorrichtung gemäß Fig. 1.
- **Fig. 9**: zeigt eine weitere Ausführungsform der erfindungsgemäßen Vorrichtung, ebenfalls mit Auflichtbeleuchtung der Referenzobjekte.
- **Fig. 10**: zeigt eine Ausführungsform der erfindungsgemäßen Vorrichtung mit Durchlichtbeleuchtung der Referenzobjekte.
- **Fig. 11**: zeigt eine Ausführungsform der erfindungsgemäßen Vorrichtung mit einer lateralen Beleuchtung der Referenzobjekte.
- **Fig. 12**: zeigt ein Detail einer Abwandlung der Ausführungsform der erfindungsgemäßen Vorrichtung gemäß Fig. 9 und
- **Fig. 13**: zeigt ein Detail einer anderen Abwandlung der erfindungsgemäßen Vorrichtung gemäß Fig. 9.

### FIGURENBESCHREIBUNG

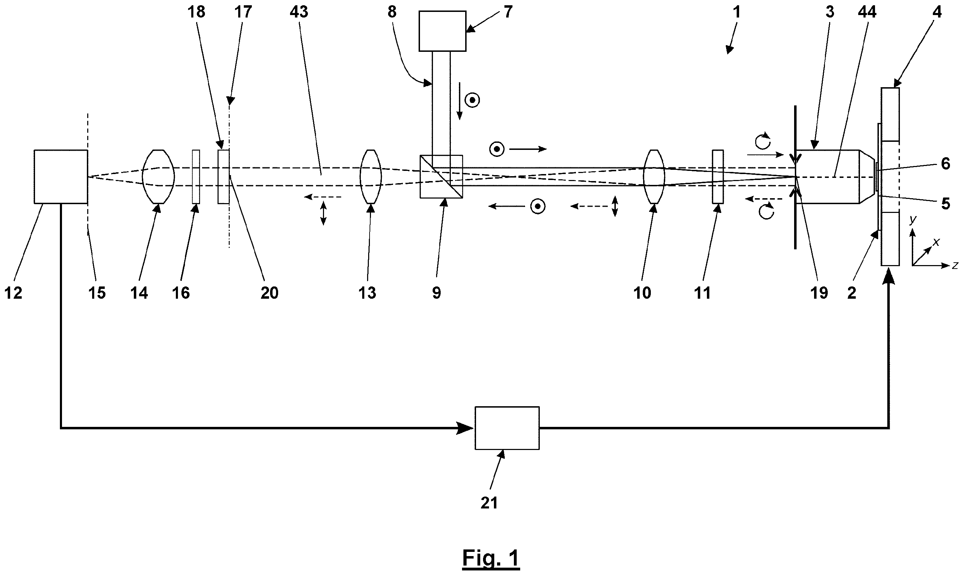

Die in **Fig. 1** gezeigte Vorrichtung 1 dient zum Erfassen von Verlagerungen einer Probe 2 gegenüber einem Objektiv 3. Die Probe 2 ist auf einem in x-, y- und z-Richtung verfahrbaren Probenpositionierer 4 angeordnet, wobei die z-Richtung mit einer optischen Achse 44 des Objektivs 3 zusammenfällt. Die Probe 2 umfasst einen Objektträger 5, ein Deckglas 6 und ein dazwischen angeordnetes interessierendes Objekt. Dieses Objekt wird primär mit Hilfe des Objektivs 3 untersucht, also beispielsweise mikroskopisch abgebildet oder gemessen, was in Fig. 1 jedoch nicht näher dargestellt ist. Diese Untersuchung des interessierenden Objekts mit Hilfe des Objektivs 3 erfolgt parallel zu der Verwendung der Vorrichtung 1 zum Erfassen der Verlagerungen der Probe 2 gegenüber dem Objektiv 3, um eine dazwischen auftretende Drift zu erfassen und zu kompensieren.

Die Vorrichtung 1 weist eine Beleuchtungslichtquelle 7 auf, die einen Strahl aus Beleuchtungslicht 8 mit einer Wellenlänge, d. h. aus monochromatischem Beleuchtungslicht 8, bereitstellt. Das Beleuchtungslicht 8 wird über einen Polarisationsstrahlteiler 9 und eine Tubuslinse 10 in das Objektiv 3 eingekoppelt, konkret in das auf der optischen Achse 44 des Objektivs 3 liegende Zentrum einer okularseitigen Pupille 19 des Objektivs 3, und beleuchtet die Probe 2 im Weitfeld. Die okularseitige Pupille 19 fällt bei dem hier in allen Figuren illustrierten Unendlich-Strahlengang, bei dem von der Probe 2 kommendes und durch die okularseitige Pupille 19 wieder aus dem Objektiv 3 austretendes Licht ein paralleles oder im Unendlichen fokussiertes Strahlenbündel ist, mit einer hinteren Fokalebene des Objektivs 3 zusammen, so dass der Begriff okularseitige Pupille hier synonym für die hintere Fokalebene des Objektivs 3 steht. Aber auch bei einem Endlich-Strahlengang mit einem Fokuspunkt des konvergierend wieder aus dem Objektiv 3 eines Mikroskops austretenden Lichts im Endlichen kann die okularseitige Pupille der hinteren Fokalebene des Objektivs 3 so nahe liegen, dass hieraus kein relevanter Unterschied in Hinblick auf die folgenden Erläuterungen resultiert.

Zwischen der Tubuslinse 10 und dem Objektiv 3 kann, so wie es in Fig. 1 dargestellt ist, eine λ/4-Verzögerungsplatte 11 angeordnet sein, die das zunächst s-linear polarisierte Beleuchtungslicht 8 rechtszirkular polarisiert. Entsprechendes, von Referenzobjekten in der Probe 2 gestreutes Licht 43 bleibt im Wesentlichen rechtszirkular polarisiert und ist dann nach erneutem Hindurchtreten durch die λ/4-Verzögerungsplatte 11 p-linear polarisiert, so dass es von dem Polarisationsstrahlteiler 9 zu einer Kamera 12 hin transmittiert wird. An optischen Grenzflächen zwischen dem Polarisationsstrahlteiler 9 und der λ/4-Verzögerungsplatte 11 reflektiertes Licht weist hingegen weiterhin eine s-lineare Polarisation auf und wird von dem Polarisationsstrahlteiler 9 zu der Beleuchtungslichtquelle 7 zurück gelenkt.

Wenn die λ/4-Verzögerungsplatte 11 weggelassen wird, weist alles an optischen Grenzflächen von dem Polarisationsstrahlteiler 9 bis zu und einschließlich der Probe 2 reflektierte Licht weiterhin eine s-lineare Polarisation auf und wird von dem Polarisationsstrahlteiler 9 zu der Beleuchtungslichtquelle 7 zurück gelenkt. Überwiegend gilt dies auch für das von den Referenzobjekten zurück in das Objektiv 3 gelangende Licht. Zu einem gewissen Anteil weist das an den Referenzobjekten gestreute Beleuchtungslicht 8 jedoch eine p-lineare Polarisation auf und gelangt so durch den Polarisationsstrahlteiler 9 zu der Kamera 12. Die absolute Menge des so selektiv von den Referenzenobjekten zu der Kamera 12 gelangenden Lichts 43 kann bei Bedarf durch Erhöhen der Intensität des Beleuchtungslichts 8 gesteigert werden.

Das Licht 43 von den Referenzobjekten in der Probe 2 wird mit einer Okularlinse 13 und einer weiteren Linse 14 in Referenzobjektbilder in einer Bildebene 15 abgebildet. Diese Referenzobjektbilder in der Bildebene 15 werden mit der Kamera 12 aufgezeichnet. Zwischen dem Polarisationsstrahlteiler 9 und der Kamera 12 ist dabei weiterhin ein Bandpassfilter 16 angeordnet, das nur das Licht 43 mit der Wellenlänge des Beleuchtungslichts zu der Kamera 12 transmittiert. Weiterhin ist dort, in einer zu der Bildebene 15 Fourier-konjugierten Ebene 17 ein Amplitudenfilter 18 angeordnet, das Anteile des Lichts, die aus einem Zentralbereich der Pupille 19 des Objektivs 3 stammen, mit einer im Zentralbereich einer Abbildung der Pupille 19 in die Fourier-konjugierte Ebene 17 angeordneten Kreisscheibe 20 ausblendet. Damit bewirkt das Amplitudenfilter 18 eine Kantendetektionsfilterung der Referenzobjektbilder in der Bildebene 15, und zwar vor der Kamera 12, so dass die Kamera 12 die bereits kantendetektionsgefilterten Referenzobjektbilder aufzeichnet, indem sie deren Lichtintensitätsverteilungen über der Bildebene 15 registriert.

Da die Referenzobjekte mit monochromatischem Beleuchtungslicht 8 beleuchtet werden, zeigen sich an steilen Kanten der Referenzobjekte in Lichtintensitätsverteilungen der Referenzobjektbilder im Anschluss an durch die Kantendetektionsfilterung stark abgeschwächte Intensitätsmaxima nullter Ordnung Intensitätsminima erster Ordnung an die sich wiederum Intensitätsmaxima erster Ordnung anschließen. Die an die Intensitätsminima erster Ordnung angrenzenden Intensitätsanstiege zu den Intensitätsmaxima nullter und erster Ordnung weisen in Bezug auf die Gesamtlichtmenge eine hohe Informationsdichte zu den Lagen der Kanten der Referenzobjekte auf. Wenn die Referenzobjekte Abmessungen von der Wellenlänge des Beleuchtungslichts 8 oder darunter haben, bestehen sie praktisch nur aus Kanten und sorgen so für eine in Bezug auf die Gesamtlichtmenge maximale Informationsdichte zu den Lagen der Referenzobjekte.

Zudem bewirkt die Kreisscheibe 20, dass auch dann, wenn die λ/4-Verzögerungsplatte 11 gemäß Fig. 1 vorhanden ist, keine Anteile des auf der optischen Achse 44 in die okularseitige Pupille 19 fokussierten Beleuchtungslichts 8, die von nahe der okularseitigen Pupille 19 liegenden und im Bereich der optischen Achse 44 senkrecht zur optischen Achse 44 ausgerichteten optischen Grenzflächen des Objektivs 3 reflektiert werden, zu der Kamera 12 gelangen und die Aufzeichnung der kantengefilterten Referenzobjektbilder mit der Kamera 12 stören. Vielmehr blendet die im Zentralbereich der Abbildung der Pupille 19 angeordneten Kreisscheibe 20 auch diese Anteile des Lichts aus dem Zentralbereich der Pupille 19 des Objektivs 3 aus.

Mit der Vorrichtung 1 werden die Referenzbilder zu aufeinander folgenden Zeitpunkten aufgenommen, und die Referenzobjektbilder werden von einer Kompensationseinrichtung 21 verglichen, um aus Änderungen der Referenzobjektbilder sichtbar werdende Verlagerungen der Probe 2 gegenüber dem Objektiv 3 durch Ansteuerung des Probenpositionierers 4 zu kompensieren.

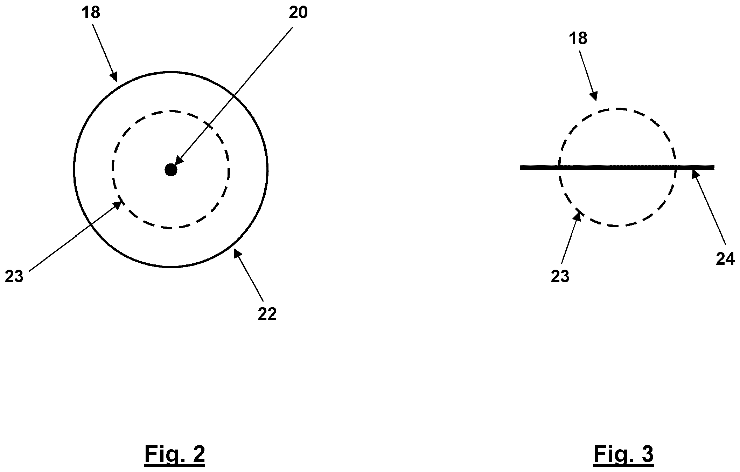

**Fig. 2** zeigt das Amplitudenfilter 18 in einer axialen Draufsicht. Die Kreisscheibe 20 ist als metallische Beschichtung eines transparenten Substrats 22 ausgebildet, und sie ist im Zentrum einer Abbildung 23 der Pupille des Objektivs in die Fourier-konjugierte Ebene 17, in der das Amplitudenfilter 18 angeordnet ist, positioniert. Die Fourier-konjugierte Ebene 17 ist eine Fourierebene zu der Bildebene 15, so dass die Kreisscheibe 20 niedrige Ortsfrequenzen aus den Referenzobjektbildern ausblendet, während sie höhere Ortsfrequenzen hindurchlässt.

In der Ausführungsform des Amplitudenfilters 18 gemäß **Fig. 3** ist dieses als Draht 24 ausgebildet, der sich geradlinig und durch dessen Zentrum hindurch über das Abbildung 23 der Pupille 19 des Objektivs 3 in der Fourier-konjugierten Ebene 17 erstreckt. Der Draht 24 blendet in der Fourierebene zwar auch höhere Ortsfrequenzen aus, aber nur zu einem geringen Anteil, während er die niedrigen Ortsfrequenzen wie die Kreisscheibe 20 gemäß Fig. 2 vollständig ausblendet.

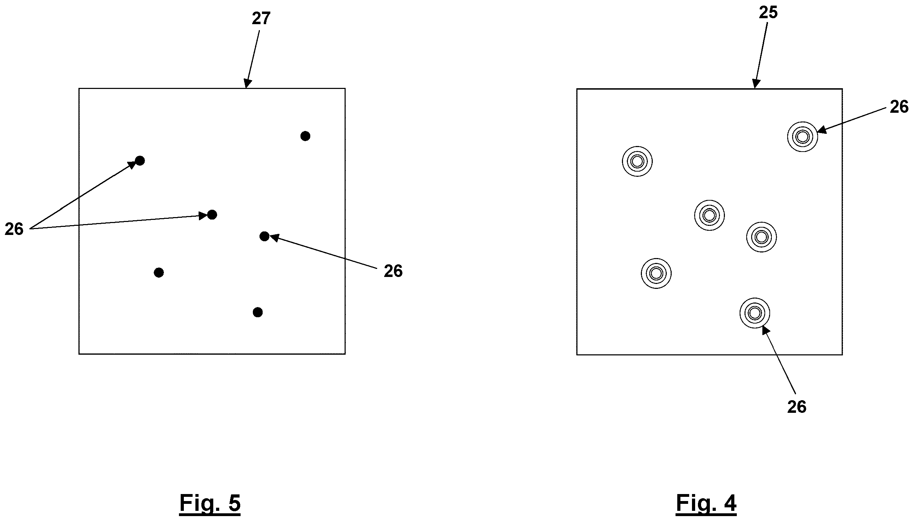

**Fig. 4** zeigt ein aus der erfindungsgemäßen Kantendetektionsfilterung resultierendes Referenzobjektbild 5, in dem die Abbilder 26 von einzelnen Referenzobjekten nur aus Randbereichen bestehen, in denen die Intensität des Lichts von den Referenzobjekten 16 zunimmt. Die im Wesentlichen konstanten hohen Intensitäten in den Zentren der Abbilder 26, die in dem zu dem Referenzobjektbild 25 gemäß Fig. 4 komplementären Bild 27 gemäß **Fig. 5** wiedergegeben sind und die keine nutzbaren Informationen über die Lage der Abbilder 26 in dem Referenzobjektbild 25 enthalten, sind aus dem Referenzobjektbild 25 ausgeblendet. Sie werden daher auch von der Kamera 12 nicht registriert und beeinflussen die Kamera 12 nicht. Vielmehr ist die Kamera 12 so ausgesteuert, dass sie die Intensitätsanstiegsbereiche der Abbilder 26 in dem Referenzobjektbild 25 gemäß Fig. 4 maximal auflöst.

Eine Überlagerung des Referenzobjektbilds 25 gemäß Fig. 4 mit dem komplementären Bild 27 gemäß **Fig. 5** würde ein herkömmliches Bild der Referenzobjekte ergeben. Ein solches herkömmliches Bild der Referenzobjekte wird jedoch mit der Kamera 12 der erfindungsgemäßen Vorrichtung 1 nicht aufgezeichnet und entsprechend auch nicht durch Bildverarbeitung in das Referenzobjektbild 25 gemäß Fig. 4 und das dazu komplementäre Bild 27 gemäß Fig. 5 zerlegt.

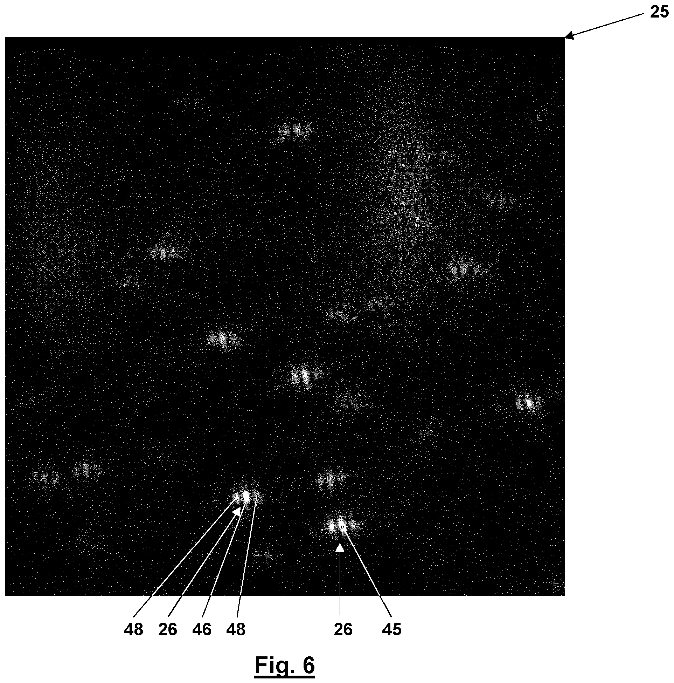

Während die Fig. 4 und 5 vereinfachte Darstellungen des Referenzobjektbilds 25 und des dazu komplementären Bilds 27 von quasi-punktförmigen Referenzobjekten zeigen, ist **Fig. 6** ein reales erfindungsgemäß kantendetektionsgefiltertes Referenzobjektbild 25 von Referenzobjekten in Form so genannter Gold-Nanorods, deren Durchmesser kleiner als die Wellenlänge des Lichts ist. In Querrichtung zu der Längserstreckung des jeweiligen Gold-Nonorods zeigen die Abbilder 26 der einzelnen Referenzobjekte Beugungsmuster mit jeweils einem Intensitätsmaximum 46 nullter Ordnung und zwei benachbarten Intensitätsmaxima 48 erster Ordnung.

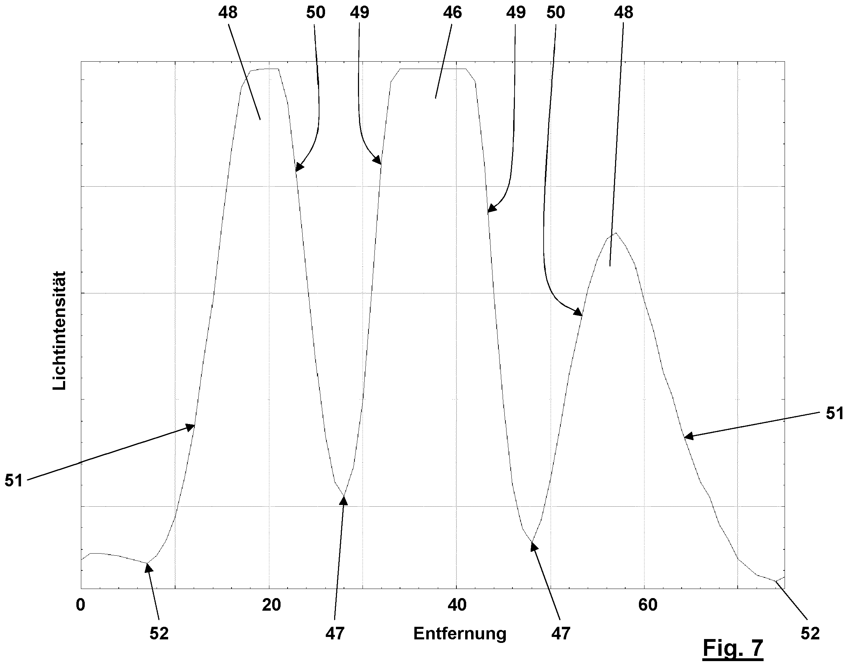

Der Verlauf der Lichtintensität längs einer in Fig. 6 eingezeichneten Schnittlinie 45 durch eines der Abbilder 26 eines der Referenzobjekte ist in **Fig. 7** über der Entfernung in Pixeln der Kamera 12 gemäß Fig. 1 aufgetragen. Die mit der Kamera 12 aufgezeichnete Lichtintensität ist im Bereich des Intensitätsmaximums 46 nullter Ordnung nicht nur durch das Kantendetektionsfiltern auf das Niveau der Lichtintensität in den Intensitätsmaxima 48 erster Ordnung gedrückt, sondern auch durch die Aussteuerung der Kamera 12 bei einem Maximalwert gekappt. Letzteres gilt hier auch für die Lichtintensität in dem links wiedergegebenen Intensitätsmaximum 48 erster Ordnung. Zwischen den Intensitätsmaxima 46 und 48 nullter und erster Ordnung liegen Intensitätsminima 47 erster Ordnung. Besondere Informationsdichte in Bezug auf die Lage der Referenzobjekte weisen an die Intensitätsminima 47 erster Ordnung angrenzende Intensitätsanstiegsbereiche 49 und 50 auf. Auch Intensitätsanstiegsbereiche 51 von Intensitätsminima 52 zweiter Ordnung zu den Intensitätsmaxima 48 erster Ordnung beinhalten nutzbare Lageinformationen.

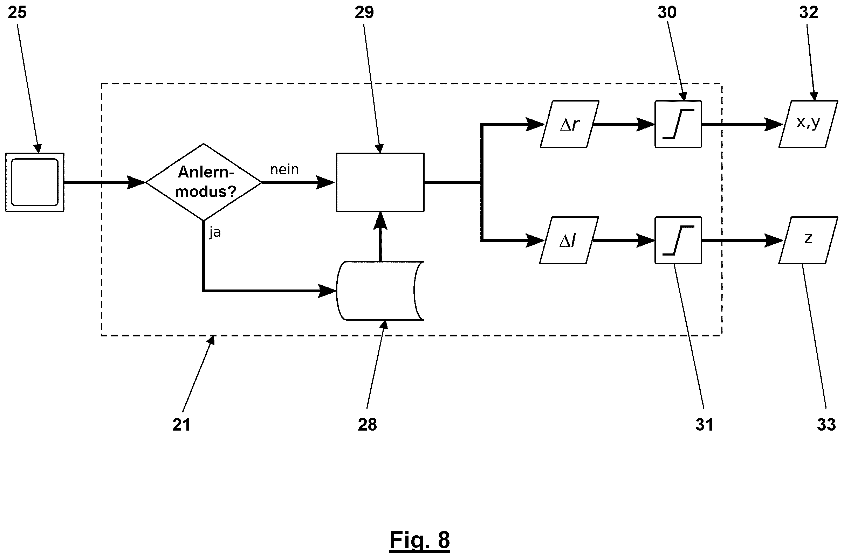

**Fig. 8** illustriert eine Ausführungsform der Kompensationseinrichtung 21 gemäß Fig. 1 bzw. des erfindungsgemäßen Verfahrens. Zunächst wird in einem Anlernmodus der Kompensationseinrichtung 21 eine Reihe von Referenzobjektbildern mit unterschiedlichen axialen Positionen zᵢ längs der optischen Achse des Objektivs 3 aufgenommen und als Referenzobjektvergleichsbilder in einem Vergleichsbildstapelspeicher 28 abgelegt. Die Probe 2 wird anschließend mit dem Probenpositionierer 4 in ihre Sollposition gebracht, und ein Kompensationsmodus der Kompensationseinrichtung 21 wird gestartet. In diesem Kompensationsmodus wird eine Regelschleife durchlaufen. In jedem Durchlauf der Regelschleife wird ein Referenzobjektbild 25 mit der Kamera 12 aufgenommen. Dann wird mit einem Bildkorrelator 29 eine räumliche Kreuzkorrelation aus dem aufgenommenen Referenzobjektbild und zumindest einigen der Referenzobjektvergleichsbilder in dem Vergleichsbildstapelspeicher 28 berechnet. Aus den Berechnungen ergibt sich eine laterale Positionsabweichung Δr in Form der Lage eines Korrelationsmaximums. Diese Lage des Korrelationsmaximums entspricht einer Verschiebung der Abbilder 26 der Referenzobjekte in dem aktuellen Referenzobjektbild gegenüber der Lage der Abbilder 26 in einem oder mehreren der Referenzobjektvergleichsbilder in dem Vergleichsbildstapelspeicher 28. Die laterale Positionsabweichung Δr zeigt die laterale Drift der Probe 2 gegenüber der optischen Achse 44 des Objektivs 3 seit der Aufnahme der Referenzobjektvergleichsbilder in dem Anlernmodus an. Weiterhin ermittelt der Bildkorrelator die Referenzobjektvergleichsbilder, mit denen das aktuelle Referenzobjektbild 25 die höchste Bildähnlichkeit aufweist, in denen also die Abbilder 26 der Referenzobjekte in gleicher Weise geformt bzw. verformt sind. Aus den axialen Positionen z; dieser ähnlichsten Referenzobjektvergleichsbilder wird auf eine axiale Positionsabweichung ΔI geschlossen, und zwar indem die aktuelle axiale Position der Probe 2 der axialen Position zᵢ des Referenzobjektvergleichsbilds mit dem höchsten Ähnlichkeitsmaß gleichgesetzt wird oder indem die aktuelle axiale Position der Probe 2 gegenüber dem Objektiv 3 aus den axialen Positionen zᵢ der Referenzobjektvergleichsbilder mit den höchsten Ähnlichkeitsmaßen extrapoliert wird. Mit Stellsignalformer 30 und 31 werden unter Berücksichtigung des Abbildungsmaßstabs der Abbildung der Probe 2 auf die Kamera 12 Stellsignale 32 und 33 zum Kompensieren der lateralen Positionsabweichung Δr und axialen Positionsabweichung ΔI im Sinne einer Annullierung dieser Positionsabweichungen geformt. Nach dem Ansteuern des Probenpositionierers 4 mit diesen Stellsignalen 32 und 33 erfolgt der nächste Durchlauf der Regelschleife mit der Aufnahme des nächsten Referenzobjektbilds 25 mit der Kamera 12.

Für die Berechnung der Kreuzkorrelationen zwischen dem aktuellen Referenzobjektbild 25 mit den Referenzobjektvergleichsbildern in dem Vergleichsbildstapelspeicher 28 kann statt einer Berücksichtigung der gesamten Bilder auch nur ein Teilbereich des Referenzobjektbilds und der Referenzobjektvergleichsbilder berücksichtigt werden, um mögliche Störsignale auszublenden. Die Aufnahme der Referenzobjektvergleichsbilder kann aber muss nicht in äquidistanten axialen Positionen erfolgen. Vielmehr ist es vorteilhaft, den axialen Abstand der Referenzobjektvergleichsbilder um die Sollposition der Probe 2 herum sehr klein zu wählen und mit zunehmenden axialen Abstand zu der Sollposition zu vergrößern. Auf diese Weise liegen im Bereich geringer axialer Drift fein abgestufte Referenzobjektvergleichsbilder vor, so dass bereits geringe Abweichungen detektiert werden können. Gleichzeitig kann ein großer Driftbereich abgedeckt werden, ohne dass hierzu eine große Zahl von Referenzobjektvergleichsbildern aufgenommen und in jedem Durchlauf der Regelschleife verarbeitet werden muss.

Weiterhin ist es möglich, neben den von den Referenzobjekten erzeugten Signalen in Form der Abbilder 26 in den Referenzobjektbildern 25 einen Rückreflex von dem Objektiv 3 oder einer vor der Pupille 19 des Objektivs 3 angeordneten Meniskuslinse auf die Kamera 12 abzubilden. Anhand dieses Rückreflexes lässt sich eine etwaige Drift der an der Abbildung der Referenzobjekte in die Referenzobjektbilder 25 beteiligten optischen Elemente separat, d. h. unabhängig von der Drift der Probe 2 gegenüber dem Objektiv 3, erfassen und korrigieren.

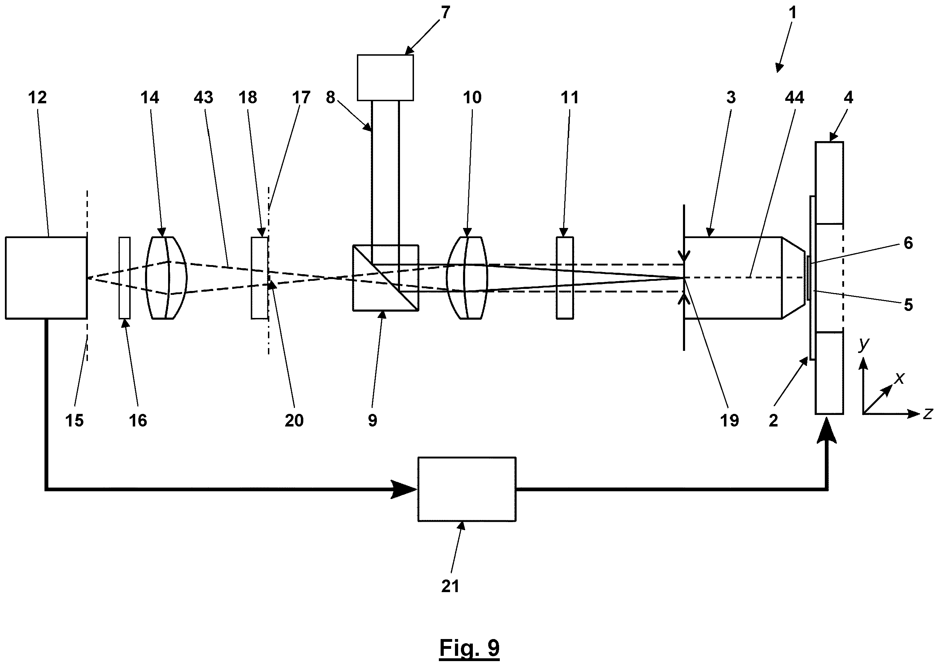

Die Ausführungsform der Vorrichtung 1 gemäß **Fig. 9** unterscheidet sich von derjenigen gemäß Fig. 1 durch einen etwas kompakteren Aufbau, in dem das Amplitudenfilter 18 zwar auch in einer zu der Bildebene 15 Fourier-konjugierten Ebene 17 angeordnet ist, aber nicht hinter der Okularlinse 13 und damit nicht in einer zur Objektebene Fourier-konjugierten Ebene angeordnet ist, in die die Pupille 19 des Objektivs 3 abgebildet wird. Aber auch hier blendet die Kreisscheibe 20 vor der Kamera 12 die niedrigen Ortsfrequenzen und auch die Anteile des Lichts aus dem Zentralbereich der Pupille 19 des Objektivs 3 aus. Das in Fig. 9 keine Polarisationsrichtungen des Beleuchtungslichts 8 und des Lichts von den Referenzobjekten eingezeichnet sind, bedeutet nicht, dass hier nicht dieselben Polarisationsrichtungen wie in Fig. 1 vorhanden sein können. Die Anordnung des Bandpassfilters 16 an anderer Stelle im Strahlengang ändert gegenüber Fig. 1 nichts an seiner Funktion.

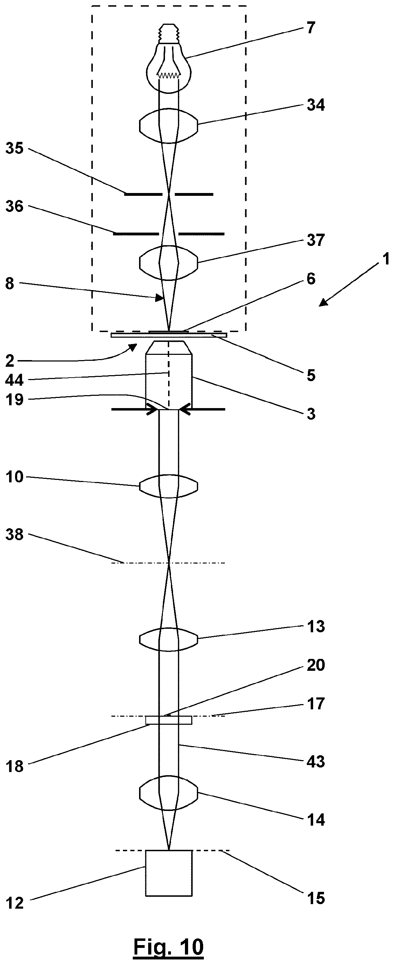

Bei der Ausführungsform der Vorrichtung 1 gemäß **Fig. 10** wird das Beleuchtungslicht 8 nicht durch das Objektiv 3 in einer Auflichtkonstellation auf die Probe 2 aufgebracht. Stattdessen wird das Beleuchtungslicht 8 hier in einer Durchlichtkonstellation von der Beleuchtungslichtquelle 7 durch eine Kollektorlinse 34, eine Lichtfeldblende 35, eine Aperturblende 36 und eine Kondensorlinse 37 in Bezug auf das Objektiv 3 von hinten auf die Probe 2 aufgebracht. Die Abbildung der mit dem Beleuchtungslicht 8 beleuchteten Referenzobjekte in der Probe 2 auf die Bildebene 15, in der die Kamera 12 angeordnet ist, entspricht bei der Ausführungsform der Vorrichtung 1 gemäß Fig. 10 derjenigen bei der Ausführungsform der Vorrichtung 1 gemäß Fig. 1. Dabei ist eine in Fig. 1 ebenfalls vorhandene, dort aber nicht dargestellte Zwischenbildebene 38 zusätzlich eingezeichnet. Auch wenn die Beleuchtungslichtquelle 7 in Fig. 10 als Glühbirne illustriert ist, kann auch in dieser Ausführungsform der Vorrichtung 1 das von den Referenzobjekten zu der Kamera 12 gelangende Licht 43 nur eine Wellenlänge aufweisen, d. h. monochromatisch sein.

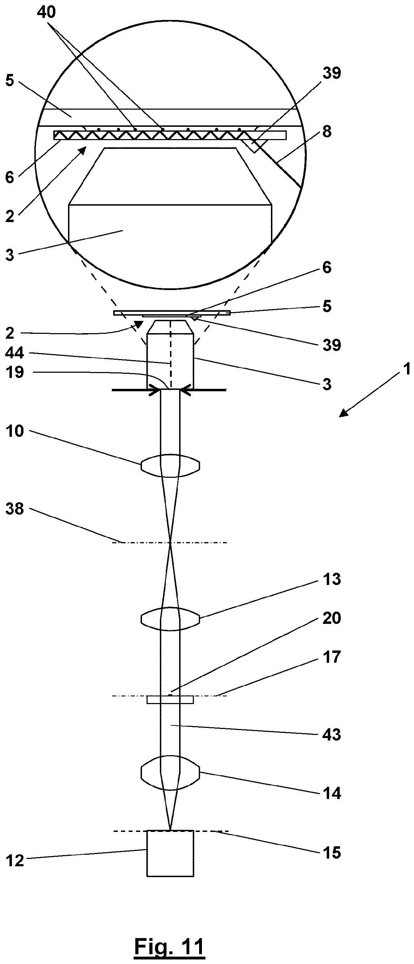

**Fig. 11** illustriert eine Ausführungsform der Vorrichtung 1, bei der noch eine weitere Möglichkeit der Beleuchtung der Referenzobjekte in der Probe 2 realisiert ist. Diese Beleuchtung ist in einem vergrößerten Detail dargestellt. Über ein Prisma 39 wird ein Strahl des Beleuchtungslichts 8 lateral in das Deckglas 6 eingekoppelt, das so als Wellenleiter für das Beleuchtungslicht 8 dient. Die Referenzobjekte 14 in der Probe 2 werden durch das in dem Deckglas 6 geführte Beleuchtungslicht 8 beleuchtet. Die Abbildung des Lichts von den Referenzobjekten 40 auf die Kamera 12 entspricht Fig. 1 und Fig. 10.

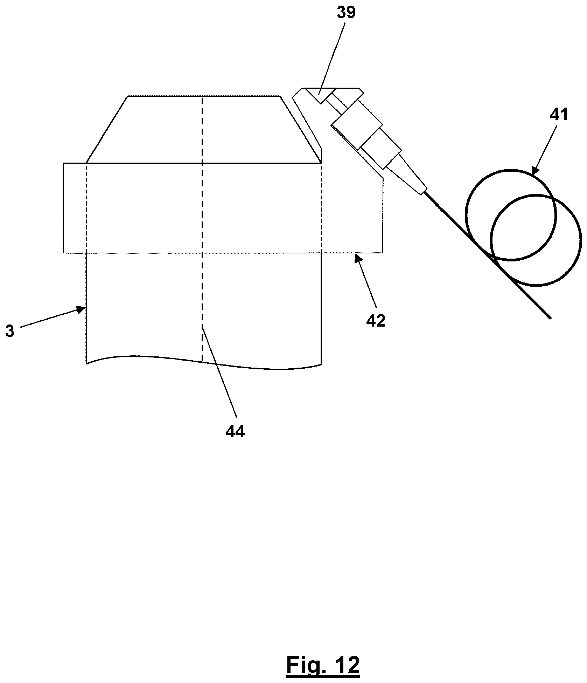

**Fig. 12** zeigt, wie ein Lichtleiter 41 mit einer Halteeinrichtung 42 an dem Objektiv 3 befestigt werden kann, um über diesen das Beleuchtungslicht 8 in das Prisma 39 gemäß Fig. 11 einzukoppeln.

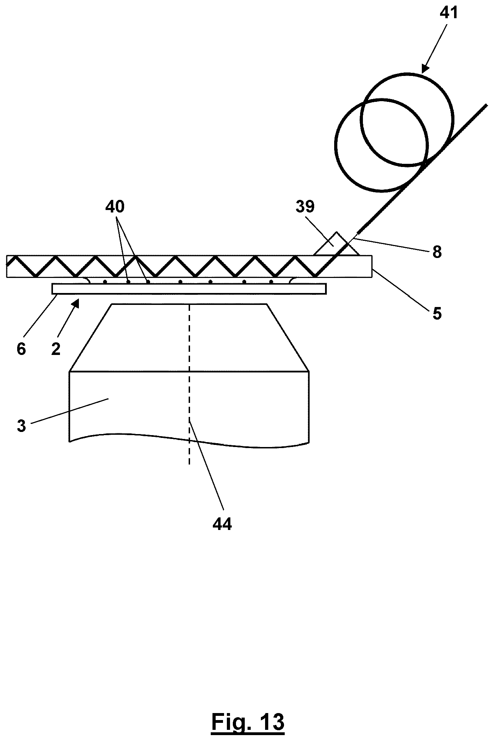

**Fig. 13** illustriert eine alternative Ausführungsform der lateralen Beleuchtung in einer dem vergrößerten Detail von Fig. 11 entsprechenden Darstellung. Der Lichtleiter 41 koppelt das Beleuchtungslicht 8 in das Prisma 39 ein, das hier auf dem Probenträger 5 angeordnet ist, so dass hier der Probenträger 5 als Wellenleiter für das Beleuchtungslicht 8 dient, um es zu den Referenzobjekten 40 in der Probe 2 zu führen. Die Referenzobjekte 40 können in die Probe 2 bzw. in das Deckglas 6 oder dem Probenträger 5 mit Laserlicht eingebrachte Markierungen sein. Hierzu kann Laserlicht hochkonzentriert in kurzen Pulsen auf den jeweiligen Ort der Probe 2 aufgebracht werden, wobei die Zerstörschwelle des jeweiligen Glases erreicht wird. Auf diese Weise können die Referenzobjekte 40 an besonders geeigneten Positionen der jeweiligen Probe angebracht werden.

Die anhand der Fig. 11 bis 13 erläuterte laterale Beleuchtung der Referenzobjekte wird hier auch unabhängig von dem Merkmal, dass Anteile des Lichts, die aus einem Zentralbereich einer Pupille des Objektivs stammen, vor der Kamera ausgeblendet werden, als Erfindung offenbart.

### BEZUGSZEICHENLISTE

- 1: Vorrichtung
- 2: Probe
- 3: Objektiv
- 4: Probenpositionierer
- 5: Objektträger
- 6: Deckglas
- 7: Beleuchtungslichtquelle
- 8: Beleuchtungslicht
- 9: Polarisationsstrahlteiler
- 10: Tubuslinse
- 11: λ/4-Verzögerungsplatte
- 12: Kamera
- 13: Okularlinse
- 14: Linse
- 15: Bildebene
- 16: Bandpassfilter
- 17: Fourier-konjugierte Ebene
- 18: Amplitudenfilter
- 19: Pupille
- 20: Kreisscheibe
- 21: Kompensationseinrichtung
- 22: Substrat
- 23: Abbildung der Pupille 19
- 24: Draht
- 25: Referenzobjektbild
- 26: Abbild eines Referenzobjekts
- 27: komplementäres Bild
- 28: Vergleichsbildstapelspeicher
- 29: Bildkorrelator
- 30: Stellsignalformer
- 31: Stellsignalformer
- 32: Stellsignal
- 33: Stellsignal
- 34: Kollektorlinse
- 35: Leuchtfeldblende
- 36: Aperturblende
- 37: Kondensorlinse
- 38: Zwischenbildebene
- 39: Prisma
- 40: Referenzobjekt
- 41: Lichtleiter
- 42: Halteeinrichtung
- 43: Licht
- 44: optische Achse
- 45: Schnittlinie
- 46: Maximum nullter Ordnung
- 47: Minimum erster Ordnung
- 48: Maximum erster Ordnung
- 49: Intensitätsanstiegsbereich
- 50: Intensitätsanstiegsbereich
- 51: Intensitätsanstiegsbereich
- 52: Minimum zweiter Ordnung
- Δr: laterale Positionsabweichung
- ΔI: axiale Positionsabweichung

## Patentansprüche

1. Verfahren zum Erfassen von Verlagerungen einer Probe (2) gegenüber einem Objektiv (3),
- wobei monochromatisches Licht (43) einer Wellenlänge von mindestens einem mit der Probe (2) verbundenen Referenzobjekt (40) zu aufeinander folgenden Zeitpunkten mit dem Objektiv (3) in Referenzobjektbilder (25) in einer Bildebene (15) abgebildet wird,
- wobei das mindestens eine Referenzobjekt (40) eine Kante aufweist, über der die Intensität des von dem Referenzobjekts (40) ausgehenden monochromatischen Lichts (43) um mindestens 90 % abfällt und deren Breite parallel zu der Bildebene kleiner als die Wellenlänge des monochromatischen Lichts (43) ist,
- wobei die Referenzobjektbilder (25) in der Bildebene (15) mit einer Kamera (12) aufgezeichnet werden und
- wobei die aufgezeichneten Referenzobjektbilder (25) miteinander verglichen werden,
**dadurch gekennzeichnet, dass** in einer zu der Bildebene (15) Fourier-konjugierten Ebene (17) vor der Kamera (12) niedrige Ortsfrequenzen aus den Referenzobjektbildern (25) derart ausgeblendet werden, dass sich in den Referenzobjektbildern an der Kante ein Beugungsmuster mit einem Intensitätsmaximum (46) nullter Ordnung, das wegen der ausgeblendeten niedrigen Ortsfrequenzen in seiner Intensität reduziert ist, ein Intensitätsminimum erster Ordnung (47) und ein sich an das Intensitätsminimum (47) erster Ordnung anschließendes Intensitätsmaximum (48) erster Ordnung mit an das Intensitätsminimum (47) erster Ordnung angrenzenden Intensitätsanstiegsbereichen (49, 50) zu den Intensitätsmaxima (46, 48) nullter und erster Ordnung ausbildet.

2. Verfahren nach Anspruch 1, **dadurch gekennzeichnet, dass** vor der Kamera (12) die niedrigen Ortsfrequenzen ausgeblendet werden, indem Anteile des Lichts (43), die aus einem Zentralbereich einer Pupille (19) des Objektivs (3) stammen, in der zu der Bildebene (15) Fourier-konjugierten Ebene (17) ausgeblendet werden., wobei die Pupille (19) des Objektivs (3) optional in die zu der Bildebene (15) Fourier-konjugierten Ebene (17) abgebildet wird.

3. Verfahren nach Anspruch 1 oder 2, **dadurch gekennzeichnet, dass** das mindestens eine Referenzobjekt (40) eine punktförmige Markierung oder ein Bead oder ein Gold-Nanorod mit einem Durchmesser unterhalb der Wellenlänge des Lichts (43) ist.

4. Verfahren nach einem der vorhergehenden Ansprüche, **dadurch gekennzeichnet, dass** das monochromatische Licht (43) der einen Wellenlänge von dem mindestens einen Referenzobjekt (40) aufgrund seiner Wellenlänge von Messlicht von der Probe (2) abgetrennt wird, das mit dem Objektiv (3) auf einen anderen Detektor als die Kamera (12) abgebildet wird.

5. Verfahren nach einem der vorhergehenden Ansprüche, **dadurch gekennzeichnet, dass** die Probe (2) im Weitfeld mit Beleuchtungslicht (8) beleuchtet wird, das eine Abstrahlung des Lichts (43) von dem mindestens einen Referenzobjekt (40) hervorruft, wobei das Beleuchtungslicht (8) optional in ein Zentrum der Pupille (19) des Objektivs (3) fokussiert wird.

6. Verfahren nach einem der Ansprüche 1 bis 4, **dadurch gekennzeichnet, dass** das mindestens eine Referenzobjekt (40)
- durch das Objektiv (3) oder
- von einer
- neben dem Objektiv (3) angeordneten,
- einer dem Objektiv (3) über die Probe (2) hinweg gegenüberliegenden oder
- einer zwischen dem Objektiv (3) und der Probe (2) liegenden Beleuchtungslichtquelle (7) aus
mit Beleuchtungslicht (8) beleuchtet wird, das die Abstrahlung des Lichts (43) von dem mindestens einen Referenzobjekt (40) hervorruft.

7. Verfahren nach einem der Ansprüche 1 bis 4, **dadurch gekennzeichnet, dass** das mindestens eine Referenzobjekt (40) durch einen quer zur optischen Achse (44) des Objektivs (3) ausgerichteten Wellenleiter hindurch mit Beleuchtungslicht (8) beleuchtet wird, das die Abstrahlung des Lichts (43) von dem mindestens einen Referenzobjekt (40) hervorruft, wobei der Wellenleiter optional eine Platte aus optisch transparentem Material ist, die als Objektträger (5) oder Deckglas (6) der Probe (2) dient.

8. Verfahren nach einem der vorhergehenden Ansprüche, **dadurch gekennzeichnet, dass** die Probe (2) mit Beleuchtungslicht (8) einer Wellenlänge beleuchtet wird, das das monochromatische Licht (43) der einen Wellenlänge von dem mindestens einen Referenzobjekt (40) hervorruft, wobei sich die Wellenlänge des Beleuchtungslichts (8) von Wellenlängen von Messlicht von der Probe (2) und von Anregungslicht, das das Messlicht von der Probe (2) hervorruft, um jeweils mindestens 50 nm unterscheidet und/oder dass wobei die Wellenlänge des Beleuchtungslichts (8) optional gleich oder größer als 800 nm ist.

9. Verfahren nach einem der vorhergehenden Ansprüche, **dadurch gekennzeichnet, dass** in den Referenzobjektbildern (25) weiteres Licht von mindestens einer zwischen der Probe (2) und dem Objektiv (3) befindlichen optischen Grenzfläche oder von mindestens einem weiteren Referenzobjekt (40), das an dem Objektiv (3) angeordnet ist, mit der Kamera (12) aufgezeichnet wird.

10. Verfahren nach einem der vorhergehenden Ansprüche, **dadurch gekennzeichnet, dass** die Kamera (12) so ausgesteuert wird, dass die maximalen Lichtintensitäten in den Referenzobjektbildern (25) 90 % bis 1.000 % oder 100 % bis 150 % einer Sättigungsintensität der Kamera (12) erreichen.

11. Verfahren nach einem der vorhergehenden Ansprüche, **dadurch gekennzeichnet,**
- **dass** aus einer Verschiebung von Abbildern (26) des mindestens einen Referenzobjekts (40) zwischen den Referenzobjektbildern (25) auf eine laterale Verlagerung der Probe (2) gegenüber dem Objektiv (3) orthogonal zu einer optischen Achse (44) des Objektivs (3) geschlossen wird und/oder
- **dass** aus Verformungen von Abbildern (26) des mindestens einen Referenzobjekts (40) zwischen den Referenzobjektbildern (25) auf eine Verlagerung der Probe (2) gegenüber dem Objektiv (3) längs der optischen Achse (44) des Objektivs (3) geschlossen wird.

12. Verfahren nach einem der vorhergehenden Ansprüche, **dadurch gekennzeichnet, dass** die Referenzobjektbilder (25) mit der Kamera (12) aufgezeichnet werden, während eine interessierende Struktur der Probe (2) durch konfokale, STED-, RESOLFT- oder MINFLUX-Mikroskopie abgebildet wird, wobei erfasste Verlagerungen der Probe (2) gegenüber dem Objektiv (3) kompensiert werden.

13. Vorrichtung zur Durchführung des Verfahrens nach einem der vorhergehenden Ansprüche mit einem Objektiv (3), mit einer Beleuchtungslichtquelle (7), die monochromatisches Licht (43) aussendet, und mit einer Kamera (12), die in einer Bildebene (15) einer das Objektiv (3) umfassenden Abbildungsoptik angeordnet ist,
- wobei die Abbildungsoptik dazu ausgebildet ist das monochromatische Licht (43) einer Wellenlänge von mindestens einem mit einer Probe (2) verbundenen Referenzobjekt (40) zu aufeinander folgenden Zeitpunkten mit dem Objektiv (3) in Referenzobjektbilder (25) in die Bildebene (15) abzubilden und
- wobei zwischen dem Objektiv (3) und der Kamera (12) eine optische Einrichtung angeordnet ist, wobei die optische Einrichtung in einer zu der Bildebene (15) Fourier-konjugierten Ebene (17) angeordnet ist,
**dadurch gekennzeichnet,**
- **dass** die optische Einrichtung dazu ausgebildet ist, niedrige Ortsfrequenzen aus den Referenzobjektbildern (25) derart auszublenden, dass sich dann, wenn das mindestens eine Referenzobjekt (40) eine Kante aufweist, über der die Intensität des von dem Referenzobjekts (40) ausgehenden monochromatischen Lichts (43) um mindestens 90 % abfällt und deren Breite parallel zu der Bildebene kleiner als die Wellenlänge des monochromatischen Lichts (43) ist, in den Referenzobjektbildern an der Kante ein Beugungsmuster mit einem Intensitätsmaximum (46) nullter Ordnung, das wegen der ausgeblendeten niedrigen Ortsfrequenzen in seiner Intensität reduziert ist, ein Intensitätsminimum erster Ordnung (47) und ein sich an das Intensitätsminimum (47) erster Ordnung anschließendes Intensitätsmaximum (48) erster Ordnung mit an das Intensitätsminimum (47) erster Ordnung angrenzenden Intensitätsanstiegsbereichen (49, 50) zu den Intensitätsmaxima (46, 48) nullter und erster Ordnung ausbildet.

14. Vorrichtung nach Anspruch 13, **dadurch gekennzeichnet, dass** die optische Einrichtung dazu ausgebildet ist, Anteile von Licht (43), die aus einem Zentralbereich einer Pupille (19) des Objektivs (3) stammen, vor der Kamera (12) auszublenden, wobei die optische Einrichtung zum Ausblenden der niedrigen Ortsfrequenzen optional
- eine Kreisscheibe (20) oder
- einen die niedrigen Ortsfrequenzen zu einem weiteren Detektor der Vorrichtung hin umlenkenden Spiegel oder
- einen Spatial Light Modulator (SLM) oder
- einen dünnen Draht (24), der sich in der zu der Bildebene (15) Fourier-konjugierten Ebene (17) durch das Zentrum einer Abbildung (23) der Pupille (19) des Objektivs (3) erstreckt, aufweist.

15. Vorrichtung nach einem der Ansprüche 13 und 14, **dadurch gekennzeichnet, dass** zwischen der Fourier-konjugierten Ebene (17) und dem Objektiv (3) ein Polarisationsstrahlteiler (9) angeordnet ist, über den die oder eine Beleuchtungslichtquelle (7) Beleuchtungslicht (8) einkoppelt, wobei Licht (43), das nach Reflexion des Beleuchtungslichts (8) an mindestens einem vor dem Objektiv (3) angeordneten Referenzobjekt (40) zurück in das Objektiv (3) gelangt, aufgrund seiner Polarisationsrichtung von dem Polarisationsstrahlteiler (9) zu der Kamera (12) hin transmittiert wird, wobei zwischen dem Polarisationsstrahlteiler (9) und dem Objektiv (3) optional eine λ/4-Verzögerungsplatte (11) angeordnet ist.

16. Vorrichtung nach einem der Ansprüche 13 bis 15, **dadurch gekennzeichnet, dass** eine Beleuchtungseinrichtung Beleuchtungslicht (8) in einen quer zur optischen Achse (44) des Objektivs (3) ausgerichteten Wellenleiter der Probe (2) einkoppelt.

## Claims

1. Method of detecting movements of a sample (2) with respect to an objective (3),
- wherein monochromatic light (43) of one wavelength from at least one reference object (40) connected to the sample (2) is imaged at consecutive points in time by means of the objective (3) into reference object images (25) in an image plane (15),
- wherein the at least one reference object (40) has an edge across which the intensity of the light (43) from the reference object (40) drops by at least 90 % and whose width in parallel to the image plane is smaller than the wavelength of the monochromatic light (43),
- wherein the reference object images (25) in the image plane (15) are recorded by a camera (12), and
- wherein the recorded reference object images (25) are compared to one another,
**characterized in that**, in a plane (17) that is Fourier-conjugated with respect to the image plane (15), low spatial frequencies are masked out of the reference object images (25) in front of the camera (12) in such a way that a diffraction pattern is formed at the edge in the reference object images, the diffraction pattern comprising a zero order intensity maximum (46) which is reduced in its intensity due to the masked out low spatial frequencies, a first order intensity minimum (47) and a first order intensity maximum (48) following to the first order intensity minimum (47) with intensity increasing regions (49, 50) neighboring the first order intensity minimum (47) towards to the zeroth and first order intensity maxima (46, 48).

2. Method of claim 1, **characterized in that** the low spatial frequencies are masked out in front of the camera (12) **in that** parts of the light (43) which originate from a central area of a pupil (19) of the objective (3) are masked out in the plane (17) that is Fourier-conjugated with respect to the image plane (15), wherein, optionally, the pupil (19) of the objective (3) is imaged into the plane (17) that is Fourier-conjugated with respect to the image plane (15).

3. Method of claim 1 or 2, **characterized in that** the at least one reference object (40) is a point-shaped marker or a bead or a gold nanorod having a diameter below the wavelength of the light (43).

4. Method of any of the preceding claims, **characterized in that** the monochromatic light (43) of the one wavelength from the at least one reference object (40) is, based on its wavelength, separated from measuring light from the sample (2) which is imaged by means of the objective onto another detector than the camera (12).

5. Method of any of the preceding claims, **characterized in that** the sample (2) is wide-field illuminated with illumination light (8) that induces an irradiation of the light (43) from the at least one reference object (40), wherein, optionally, the illumination light (8) is focused into a center of the pupil (19) of the objective (3).

6. Method of any of the claims 1 to 4, **characterized in that** the at least one reference object (40) is illuminated with illumination light (8) that induces the irradiation of the light (43) from the at least one reference object (40)
- through the objective (3) or
- from a illumination light source (7) which is
- arranged besides the objective (3),
- facing the objective (3) across the sample (2) or
- located between the objective (3) and the sample (2).

7. Method of any of the claims 1 to 4, **characterized in that** the at least one reference object (40) is illuminated with illumination light (8) that induces the irradiation of the light (43) from the at least one reference object (40) through a waveguide which is oriented transversely with respect to an optical axis (44) of the objective (3), wherein, optionally, the waveguide is a plate of optically transparent material which serves as an object slide (5) or coverslip (6) of the sample (2).

8. Method of any of the preceding claims, **characterized in that** the sample (2) is illuminated with illumination light (8) of one wavelength, that induces the monochromatic light (43) of the one wavelength from the at least one reference object (40), wherein the wavelength of the illumination light (8) differs by at least 50 nm from wavelengths of measuring light from the sample (2) and of excitation light that induces the measuring light from the sample (2), and/or wherein, optionally, the wavelength of the illumination light (8) is at least 800 nm.

9. Method of any of the preceding claims, **characterized in that** further light from at least one optical boundary surface located between the sample (2) and the objective (3) or from at least one further reference object (40) which is arranged at the objective (3) is recorded by the camera (12).

10. Method of any of the preceding claims, **characterized in that** the camera (12) is controlled such that the maximum light intensities in the reference object images (25) reach 90 % to 1000 % or 100 % to 150 % of a saturation intensity of the camera (12).

11. Method of any of the preceding claims, **characterized in**
- **that** a lateral movement of the sample (2) with respect to the objective (3) orthogonal to an optical axis (44) of the objective (3) is gathered from a shift of images (26) of the at least one reference object (40) between the reference object images (25), and/or
- **that** a movement of the sample (2) with respect to the objective (3) along the optical axis (44) of the objective (3) is gathered from deformations of images (26) of the at least one reference object (40) between the reference object images (25).

12. Method of any of the preceding claims, **characterized in that** the reference object images (25) are recorded by the camera (12) while a structure of interest of the sample (2) is imaged by confocal, STED, RESOLFT or MINFLUX microscopy, wherein the detected movements of the sample (2) with respect to the objective (3) are compensated.

13. Apparatus for carrying out the method of any of the preceding claims, comprising an objective (3), an illumination light source (7) which emits monochromatic light (43), and a camera (12) which is arranged in an image plane (15) of imaging optics that include the objective (3),
- wherein the imaging optics are configured to image the monochromatic light (43) of one wavelength from at least one reference object (40) connected to the sample (2) at consecutive points in time by means of the objective (3) into reference object images (25) in an image plane (15),
wherein an optical device is arranged between the objective (3) and the camera (12), wherein the optical device is arranged in a plane (17) that is Fourier-conjugated with respect to the image plane (15),
**characterized in that** the optical device is configured to mask out low spatial frequencies of the reference object images (25) in such a way that, if the at least one reference object (40) has an edge across which the intensity of the light (43) from the reference object (40) drops by at least 90 % and whose width in parallel to the image plane is smaller than the wavelength of the monochromatic light (43), a diffraction pattern is formed at the edge in the reference object images, the diffraction pattern comprising a zero order intensity maximum (46) which is reduced in its intensity due to the masked out low spatial frequencies, a first order intensity minimum (47) and a first order intensity maximum (48) following to the first order intensity minimum (47) with intensity increasing regions (49, 50) neighboring the first order intensity minimum (47) towards to the zeroth and first order intensity maxima (46, 48).

14. Apparatus of claim 13, **characterized in that** the optical device is configured to mask out parts of light (43), which originate from a central area of a pupil (19) of the objective (3), in front of the camera (12), wherein, optionally, the optical device for masking out the low spatial frequencies comprises
- a circular disc (20) or
- a mirror deflecting the low spatial frequencies to a further detector of the apparatus, or
- a spatial light modulator (SLM) or
- a thin wire (24) which extends in the plane that is Fourier-conjugated with respect to the image plane (15) through the center of an image (23) of the pupil (19) of the objective (3).

15. Apparatus of any of the claims 13 and 14, **characterized in that** a polarizing beam splitter (9) is arranged between the Fourier-conjugated plane (17) and the objective (3), via which the or an illumination light source (7) couples-in illumination light (8), wherein light (43) that gets back into the objective (3) after reflection of the illumination light (8) at the at least one reference object (40) arranged in front of the objective (3) is transmitted towards the camera (12) by the polarizing beam splitter (9) due to its polarization direction, wherein, optionally, a 0/4 waveplate (11) is arranged between the polarizing beam splitter (9) and the objective (3).

16. Apparatus of any of the claims 13 to 15, **characterized in that** an illumination device couples illumination light (8) into a waveguide oriented transversely with respect to an optical axis (44) of the objective (3).

## Revendications

1. Procédé de mesure de déplacements d'un échantillon (2) par rapport à un objectif (3),
- dans lequel une lumière monochromatique (43) d'une longueur d'onde provenant d'au moins un objet de référence (40) relié à l'échantillon (2) est représentée à des moments successifs avec l'objectif (3) des images de l'objet de référence (25) dans un plan d'image (15),
- dans lequel l'au moins un objet de référence (40) présente un bord par l'intermédiaire duquel l'intensité de la lumière monochromatique (43) émise par l'objet de référence (40) diminue d'au moins 90 % et dont la largeur parallèle au plan d'image est inférieure à la longueur d'onde de la lumière monochromatique (43),
- dans lequel les images de l'objet de référence (25) dans le plan d'image (15) sont enregistrées avec une caméra (12) et
- dans lequel les images de l'objet de référence (25) enregistrées sont comparées entre elles,
**caractérisé en ce que**, dans un plan conjugué de Fourier (17) par rapport au plan d'image (15), devant la caméra (12), des fréquences locales basses provenant des images de l'objet de référence (25) sont prévues de sorte qu'un motif de diffraction se forme dans les images de l'objet de référence au niveau de l'arête, avec un maximum d'intensité (46) d'ordre zéro, qui est réduit dans son intensité du fait des fréquences locales basses masquées, un minimum d'intensité de premier ordre (47) et un maximum d'intensité (48) de premier ordre suivant le minimum d'intensité (47) de premier ordre, avec des parties d'augmentation d'intensité (49, 50), adjacentes au minimum d'intensité (47) de premier ordre, correspondant aux maxima d'intensité (46, 48) d'ordre zéro et de premier ordre.

2. Procédé selon la revendication 1, **caractérisé en ce que**, devant la caméra (12), les fréquences locales basses sont masquées grâce au fait que des parties de la lumière (43), qui proviennent d'une zone centrale d'une pupille (19) de l'objectif (3), sont masquées dans le plan conjugué de Fourier (17) par rapport au plan d'image (15), dans lequel la pupille (19) de l'objectif (3) est en option représentée dans le plan conjugué de Fourier (17), correspondant au plan d'image (15).

3. Procédé selon la revendication 1 ou 2, **caractérisé en ce que** l'au moins un objet de référence (40) est un marquage ponctuel ou une bille ou une nanotige en or avec un diamètre inférieur à la longueur d'onde de la lumière (43).

4. Procédé selon l'une des revendications précédentes, **caractérisé en ce que** la lumière monochromatique (43) d'une longueur d'onde provenant de l'au moins un objet de référence (40) est séparée, du fait de sa longueur d'onde, de la lumière de mesure provenant de l'échantillon (2), qui est représentée avec l'objectif (3) sur un autre détecteur que la caméra (12).

5. Procédé selon l'une des revendications précédentes, **caractérisé en ce que** l'échantillon (2) est éclairé dans le grand champ avec une lumière d'éclairage (8) qui provoque une émission de la lumière (43) par l'au moins un objet de référence (40), dans lequel la lumière d'éclairage (8) est focalisée, en option, dans un centre de la pupille (19) de l'objectif (3).

6. Procédé selon l'une des revendications 1 à 4, **caractérisé en ce que** l'au moins un objet de référence (40)
- est éclairé avec une lumière d'éclairage (8) par l'objectif (3) ou
- à partir d'une source de lumière d'éclairage (7)
- disposée à proximité de l'objectif (3),
- disposée en face de l'objectif (3) au-delà de l'échantillon (2) ou
- se trouvant entre l'objectif (3) et l'échantillon (2)
qui provoque l'émission de la lumière (43) par l'au moins un objet de référence (40).

7. Procédé selon l'une des revendications 1 à 4, **caractérisé en ce que** l'au moins un objet de référence (40) est éclairé avec une lumière d'éclairage (8) à travers un guide d'ondes orienté transversalement par rapport à l'axe optique (44) de l'objectif (3), qui provoque l'émission de la lumière (43) par l'au moins un objet de référence (40), dans lequel le guide d'ondes est, en option, une plaque constituée d'un matériau transparent qui sert de support d'objet (5) ou de verre de protection (6) de l'échantillon (2).

8. Procédé selon l'une des revendications précédentes, **caractérisé en ce que** l'échantillon (2) est éclairé avec une lumière d'éclairage (8) d'une longueur d'onde qui produit la lumière monochromatique (43) d'une longueur provenant de l'au moins un objet de référence (40), dans lequel la longueur de la lumière d'éclairage (8) se distingue des longueurs d'onde de la lumière de mesure provenant de l'échantillon (2) et de la lumière d'excitation qui produit la lumière de mesure provenant de l'échantillon (2), respectivement d'au moins 50 nm et/ou dans lequel la longueur d'onde de la lumière d'éclairage (8) est en option supérieure ou égale à 800 nm.

9. Procédé selon l'une des revendications précédentes, **caractérisé en ce que**, dans les images de l'objet de référence (25), une autre lumière provenant d'au moins une surface limite se trouvant entre l'échantillon (2) et l'objectif (3) ou provenant d'au moins un autre objet de référence (40), qui est disposé au niveau de l'objectif (3), est enregistrée avec la caméra (12).

10. Procédé selon l'une des revendications précédentes, **caractérisé en ce que** la caméra (12) est contrôlée de sorte que les intensités lumineuses maximales dans images de l'objet de référence (25) atteignent de 90 % à 1000 % ou de 100 % à 150 % d'une intensité de saturation de la caméra (12).

11. Procédé selon l'une des revendications précédentes, **caractérisé en ce que**
- à partir du décalage des représentations (26) de l'au moins un objet de référence (40) entre les images de l'objet de référence (25), on déduit un déplacement latéral de l'échantillon (2) par rapport à l'objectif (3), de manière orthogonale par rapport à un axe optique (44) de l'objectif (3) et/ou
- à partir des déformations des représentations (26) de l'au moins un objet de référence (40) entre les images de l'objet de référence (25), on déduit un déplacement de l'échantillon (2) par rapport à l'objectif (3) le long de l'axe optique (44) de l'objectif (3).

12. Procédé selon l'une des revendications précédentes, **caractérisé en ce que** les images de l'objet de référence (25) sont enregistrées avec la caméra (12) tandis qu'une structure intéressante de l'échantillon (2) est représentée par microscopie confocale, STED, RESOLFT ou MINFLUX, dans lequel les déplacements mesurés de l'échantillon (2) par rapport à l'objectif (3) sont compensés.

13. Dispositif pour l'exécution d'un procédé selon l'une des revendications précédentes avec un objectif (3), avec une source de lumière d'éclairage (7), qui émet une lumière monochromatique (43) et avec une caméra (12) qui est disposée dans un plan d'image (15) d'une optique de représentation comprenant l'objectif (3),
- dans lequel l'optique de représentation est conçue pour représenter la lumière monochromatique (43) d'une longueur d'onde provenant d'au moins un objet de référence (40) relié à un échantillon (2) à des moments successifs avec l'objectif (3) dans des images de l'objet de référence (25) dans le plan d'image (15) et
- dans lequel, entre l'objectif (3) et la caméra (12) se trouve un dispositif optique, dans lequel le dispositif optique est disposé dans un plan conjugué de Fourier (17) par rapport au plan d'image (15),
**caractérisé en ce que**
- le dispositif optique est conçu pour masquer les basses fréquences locales dans les images de l'objet de référence (25) de sorte que, lorsque l'au moins un objet de référence (40) présente un bord par l'intermédiaire duquel l'intensité de la lumière monochromatique (43) émise par l'objet de référence diminue d'au moins 90 % et dont la largeur parallèle au plan d'image est inférieure à la longueur d'onde de la lumière monochromatique (43), il se forme, dans les images de l'objet de référence, sur le bord, un motif de diffraction avec un maximum d'intensité (46) d'ordre zéro, qui est réduit dans son intensité du fait des basses fréquences locales masquées, un minimum d'intensité de premier ordre (47) et un maximum d'intensité (48) de premier ordre suivant le minimum d'intensité (47) de premier ordre, avec des parties d'augmentation d'intensité (49, 50), adjacentes au minimum d'intensité (47) de premier ordre, par rapport aux maxima d'intensité (46, 48) d'ordre zéro et de premier ordre.

14. Dispositif selon la revendication 13, **caractérisé en ce que** le dispositif optique est conçu pour masquer les parties de la lumière (43) qui proviennent de la zone centrale d'une pupille (19) de l'objectif (3), devant la caméra (12), dans lequel le dispositif optique présente, pour le masquage des basses fréquences locales, en option :
- un disque circulaire (20) ou
- un miroir déviant les basses fréquences locales vers un autre détecteur du dispositif ou
- un Spatial Light Modulator (SLM) ou
- un fil mince (24) qui s'étend dans le plan conjugué de Fourier (17) par rapport au plan d'image (15) à travers le centre d'une représentation (23) de la pupille (19) de l'objectif (3).

15. Dispositif selon l'une des revendications 13 et 14, **caractérisé en ce que**, entre le plan conjugué de Fourier (17) et l'objectif (3), est disposé un diviseur de faisceau de polarisation (9) par l'intermédiaire duquel la ou une source de lumière d'éclairage (7) introduit une lumière d'éclairage (8), dans lequel la lumière (43) qui, après réflexion de la lumière d'éclairage (8) au moins au niveau d'un objet de référence (40) disposé avant l'objectif (3), arrive dans l'objectif (3), est transmise, du fait de sa direction de polarisation, du diviseur de faisceau de polarisation (9) à la caméra (12), dans lequel, entre le diviseur de faisceau de polarisation (9) et l'objectif (3) est disposée, en option, une plaque de retardement λ/4 (11).

16. Dispositif selon l'une des revendications 13 à 15, **caractérisé en ce qu'**un dispositif d'éclairage introduit une lumière d'éclairage (8) dans un guide d'ondes de l'échantillon (2), orienté transversalement par rapport à l'axe optique (44) de l'objectif (3).
